(19) Europäisches Patentamt / European Patent Office / Office européen des brevets

(11) **EP 4 738 051 A1**

(12) **EUROPEAN PATENT APPLICATION**
published in accordance with Art. 153(4) EPC

(43) Date of publication:
**06.05.2026  Bulletin 2026/19**

(21) Application number: **24882584.6**

(22) Date of filing: **25.07.2024**

(51) International Patent Classification (IPC):
**G06F 1/16** (2006.01)    **G06F 3/14** (2006.01)

(52) Cooperative Patent Classification (CPC):
**G06F 1/16; G06F 3/14**

(86) International application number:
**PCT/KR2024/010765**

(87) International publication number:
**WO 2025/089555 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.10.2023  KR 20230142044**
**11.12.2023  KR 20230179078**

(71) Applicant: **Samsung Electronics Co., Ltd.**
**Suwon-si, Gyeonggi-do 16677 (KR)**

(72) Inventors:
• **JUN, Jaeyoung**
  **Suwon-si, Gyeonggi-do 16677 (KR)**
• **CHOI, Sungyun**
  **Suwon-si, Gyeonggi-do 16677 (KR)**
• **CHOI, Junyoung**
  **Suwon-si, Gyeonggi-do 16677 (KR)**
• **PARK, Cheolwoong**
  **Suwon-si, Gyeonggi-do 16677 (KR)**
• **YOON, Shinhyuk**
  **Suwon-si, Gyeonggi-do 16677 (KR)**
• **JEONG, Jongil**
  **Suwon-si, Gyeonggi-do 16677 (KR)**

(74) Representative: **Nederlandsch Octrooibureau**
**P.O. Box 29720**
**2502 LS The Hague (NL)**

(54) **MULTI-FOLDABLE ELECTRONIC DEVICE COMPRISING SENSORS**

(57)    A multi-foldable electronic device according to one embodiment of the present invention comprises: a first housing comprising a first sensor; a second housing comprising a second sensor; a third housing comprising a third sensor; a first hinge member coupled between the first housing and the second housing; a second hinge member coupled between the second housing and the third housing; a flexible display comprising a first display area supported by the first housing, a second display area supported by the second housing, and a third display area supported by the third housing that comprises a fourth display area on the opposite surface of the third display area; a processor; and a memory for storing instructions, wherein the instructions, when executed by the processor, cause the multi-foldable electronic device to detect a first angle between the first housing and the second housing by using the first sensor and the second sensor, detect a second angle between the second housing and the third housing by using the second sensor and the third sensor, identify usage modes of the first housing, the second housing, and the third housing on the basis of the first angle and the second angle, and change display states of the first display area, the second display area, the third display area, and the fourth display area on the basis of the usage modes.

EP 4 738 051 A1

FIG. 5

## Description

**[Technical Field]**

Various embodiments of the disclosure disclose a multi-foldable electronic device including at least one sensor.

**[Background Art]**

The use of foldable electronic devices that fold and unfold in a horizontal direction or a vertical direction is increasing, and various functions are being provided to the foldable electronic devices.

The foldable electronic device may be operated such that a first housing and a second housing are folded or unfolded about a hinge module (e.g., a hinge member).

The foldable electronic device may include a flexible display that is positioned at least partially across the first housing, the hinge module, and the second housing.

The foldable electronic device may use the flexible display to provide a user with a variety of information, such as text, images, and/or videos.

**[Disclosure of Invention]**

**[Technical Problem]**

A user's demand for an expansion of a display of a foldable electronic device has been increasing. A foldable electronic device may be implemented as a multi-foldable electronic device including a first housing, a second housing, and a third housing.

In the multi-foldable electronic device, the first housing, the second housing, and the third housing may operate in an in-folding and/or out-folding manner using a first hinge member and a second hinge member.

The multi-foldable electronic device may include a flexible display disposed at least partially across the first housing, the second housing, and the third housing.

When a plurality of housings among the first housing, the second housing, and the third housing are arranged in substantially the same direction of gravity without a sensor disposed in any one of the first housing, the second housing, and the third housing, the multi-foldable electronic device may not be able to detect an angle between adjacent housings.

For example, when the angle between adjacent housings is not detected, the multi-foldable electronic device may not be able to provide various user interfaces (UIs) or applications (e.g., execution screens of applications) to the user using the flexible display (e.g., a first display) and/or sub-display (e.g., a second display).

Various embodiments of the disclosure may provide a multi-foldable electronic device capable of detecting angles among the first, second, and third housings using sensors (e.g., 6-axis sensors) respectively disposed in the first, second, and third housings, and changing and displaying an application and/or user interface (UI) depending on the usage state (e.g., the arrangement state) or usage mode of the multi-foldable electronic device.

The technical problems to be solved by the disclosure are not limited to the technical problems mentioned above, and other technical problems not mentioned above will be clearly understood by those skilled in the art to which the disclosure pertains from the description below.

**[Solution to Problem]**

A multi-foldable electronic device according to an embodiment of the disclosure may include a first housing including a first sensor, a second housing including a second sensor, a third housing including a third sensor, a first hinge member coupled between the first housing and the second housing, and a second hinge member coupled between the second housing and the third housing. According to an embodiment, the multi-foldable electronic device may include a flexible display that includes a first display area supported by the first housing, a second display area supported by the second housing, and a third display area supported by the third housing. According to an embodiment, the third housing may include a fourth display area on the opposite surface of the third display area. According to an embodiment, the multi-foldable electronic device may further include a processor and memory storing instructions, and the instructions may be configured to cause, when executed by the processor, the multi-foldable electronic device to detect a first angle between the first housing and the second housing using the first sensor and the second sensor, detect a second angle between the second housing and the third housing using the second sensor and the third sensor, identify usage mode of the first housing, the second housing, and the third housing, based on the first angle and the second angle, and change display states of the first display area, the second display area, the third display area, and the fourth display area, based on the usage mode.

A multi-foldable electronic device according to an embodiment of the disclosure may include a first housing including a first sensor, a second housing including a second sensor, a third housing including a third sensor, a first hinge member coupled between the first housing and the second housing, a second hinge member coupled between the second housing and the third housing, and a flexible display that includes a first display area supported by the first housing, a second display area supported by the second housing, and a third display area supported by the third housing. According to an embodiment, the multi-foldable electronic device may further include a processor and memory storing instructions, and the instructions may be configured to cause, when executed by the processor, the multi-foldable electronic device to detect a first angle between the first housing and the second housing using the first sensor and the second sensor, detect a second angle between the second housing and the third housing using the second sensor and the third sensor, identify usage mode of the first housing, the second housing, and the third housing, based on the first angle and the second angle, and perform control turn on and/or off at least one of the first display area, the second display area, and the third display area, based on the usage mode.

**[Advantageous Effects of Invention]**

According to various embodiments of the disclosure, it is possible to detect angles among the first housing, the second housing, and the third housing using sensors (e.g., 6-axis sensors) respectively disposed in the first housing, the second housing, and the third housing, and to provide a user with various applications and/or user interfaces depending on the usage state (e.g., the arrangement state) or usage mode of the multi-foldable electronic device.

In addition, various effects that are directly or indirectly understood through this document may be provided.

**[Brief Description of Drawings]**

In connection with the description of the drawings, the same or similar reference numerals may be used for the same or similar components.

FIG. 1 is a block diagram of an electronic device in a network environment according to various embodiments of the disclosure.

FIG. 2A is a schematic diagram of a multi-foldable electronic device in an unfolded state, when viewed from the front, according to an embodiment of the disclosure.

FIG. 2B is a schematic diagram of a multi-foldable electronic device in an unfolded state, when viewed from the rear, according to an embodiment of the disclosure.

FIG. 3A is a schematic diagram of a multi-foldable electronic device in a folded state of a first housing relative to a second housing according to an embodiment of the disclosure.

FIG. 3B is a schematic diagram of a multi-foldable electronic device in a folded state of a first housing and a third housing relative to a second housing according to an embodiment of the disclosure.

FIG. 3C is a schematic perspective view of a multi-foldable electronic device in a folded state of a first housing and a third housing relative to a second housing, when viewed from one direction, according to an embodiment of the disclosure.

FIG. 4 is a diagram illustrating an embodiment of calculating angle among a first housing, a second housing, and a third housing using a first sensor, a second sensor, and a third sensor of a multi-foldable electronic device according to an embodiment of the disclosure.

FIG. 5 is a block diagram schematically illustrating the configuration of a multi-foldable electronic device according to an embodiment of the disclosure.

FIG. 6 is a diagram schematically illustrating a multi-foldable electronic device according to an embodiment of the disclosure, wherein a first housing and a second housing are unfolded, and a third housing is folded relative to the second housing at a first specified angle.

FIG. 7 is a diagram schematically illustrating a multi-foldable electronic device according to an embodiment of the disclosure, wherein a first housing and a second housing are unfolded, and a third housing is folded relative to the second housing at a second specified angle.

FIG. 8 is a diagram schematically illustrating a multi-foldable electronic device according to an embodiment of the disclosure, wherein a first housing, a second housing, and a third housing are folded into a substantially triangular shape.

FIG. 9 is a diagram schematically illustrating the multi-foldable electronic device disclosed in FIG. 8, wherein, in the state where the first housing, the second housing, and the third housing are folded into a substantially triangular shape, the third housing is further folded at a specified angle relative to the second housing according to various embodiments of the disclosure.

FIG. 10A is a schematic diagram illustrating a multi-foldable electronic device in an unfolded state, when viewed from the front, according to various embodiments of the disclosure.

FIG. 10B is a schematic diagram illustrating a multi-foldable electronic device in an unfolded state, when viewed from the rear, according to various embodiments of the disclosure.

FIG. 11 is a schematic diagram illustrating a state where a first housing and a third housing of a multi-foldable electronic device are folded relative to a second housing, when viewed from one direction, according to various embodiments of the disclosure.

FIG. 12 is a perspective view schematically illustrating a state where a first housing and a third housing of a multi-foldable electronic device are folded relative to a second housing according to various embodiments of the disclosure.

FIG. 13 is a diagram illustrating a method for calculating angles among a first housing, a second housing, and a third housing using a first sensor, a second sensor, and a third sensor of a multi-foldable electronic device according to various embodiments of the disclosure.

FIG. 14 is a diagram schematically illustrating an example of a usage state of a first housing, a second housing, and a third housing of a multi-foldable electronic device according to various embodiments of the disclosure.

FIG. 15 is a diagram schematically illustrating a state in which a third display area is activated depending on a usage state of a multi-foldable electronic device according to various embodiments of the disclosure.

FIG. 16 is a diagram schematically illustrating a state in which a second display area and a third display area are activated depending on a usage state of a multi-foldable electronic device according to various embodiments of the disclosure.

FIG. 17 is a diagram schematically illustrating a state in which a first display area and a third display area are activated depending on a usage state of a multi-foldable electronic device according to various embodiments of the disclosure.

FIG. 18A is a diagram schematically illustrating a multi-foldable electronic device in a folded state of a first housing, a second housing, and a third housing according to various embodiments of the disclosure.

FIG. 18B is a diagram schematically illustrating a multi-foldable electronic device in an unfolded state of a first housing, a second housing, and a third housing according to various embodiments of the disclosure.

FIG. 19 is a diagram schematically illustrating a multi-foldable electronic device in a standing state where a first housing, a second housing, and a third housing are folded in a substantially triangular shape according to various embodiments of the disclosure.

**[Mode for the Invention]**

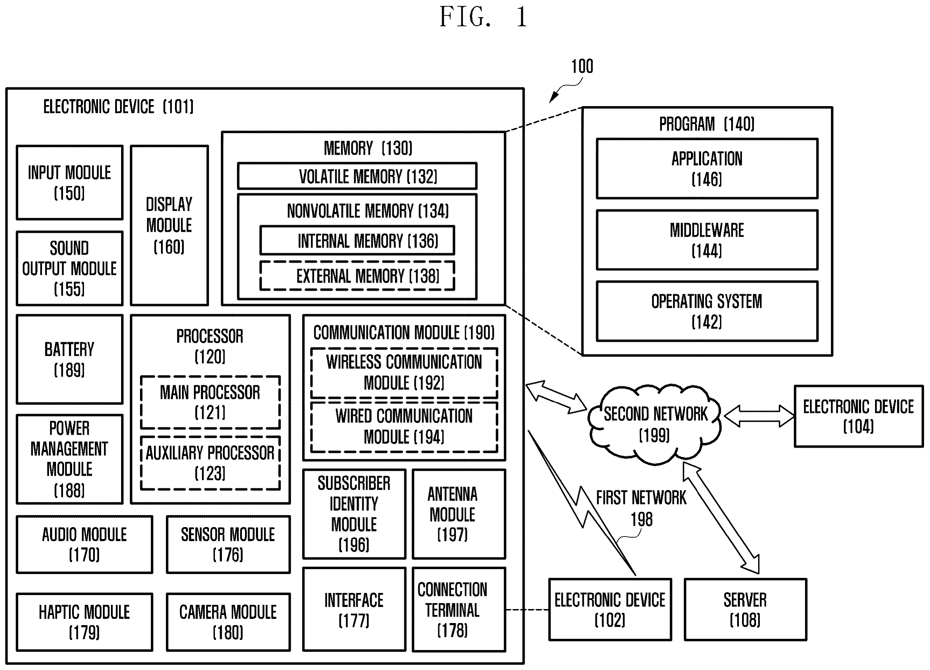

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it denotes that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

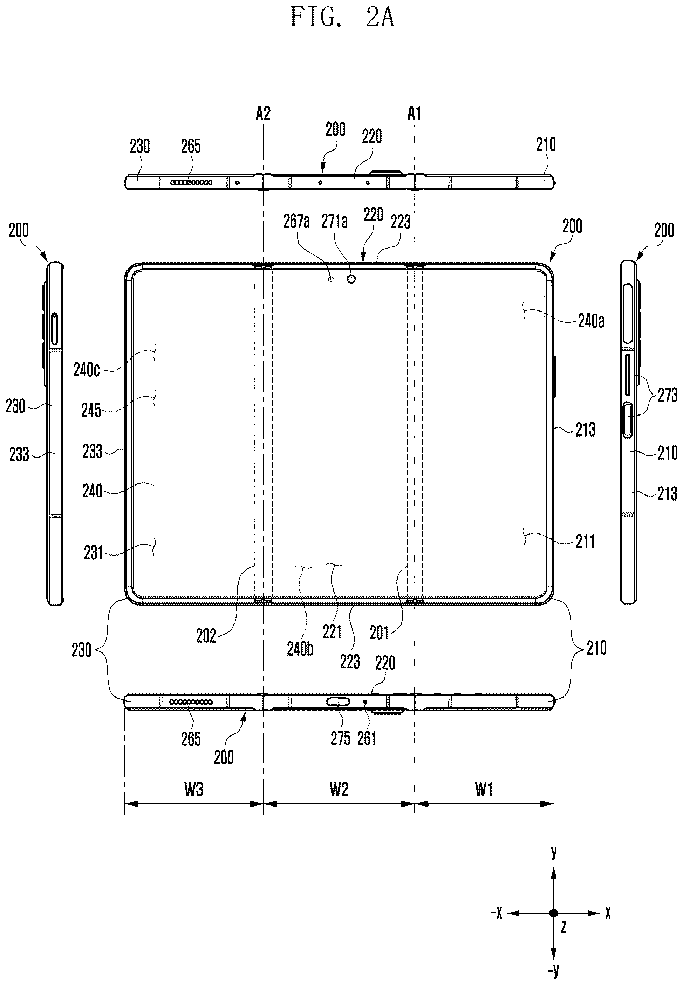

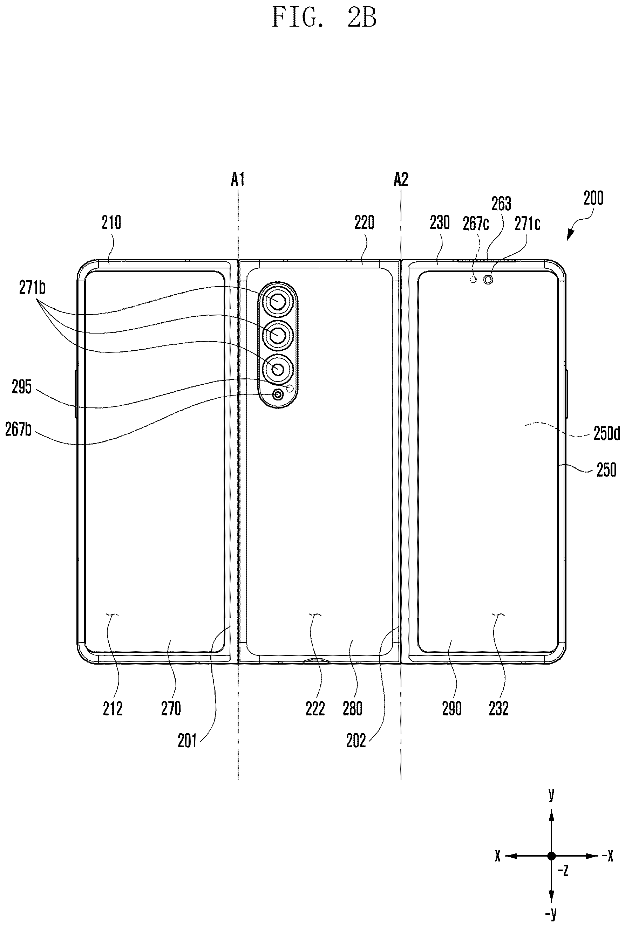

FIG. 2A is a schematic diagram of a multi-foldable electronic device in an unfolded state, when viewed from the front, according to an embodiment of the disclosure. FIG. 2B is a schematic diagram of a multi-foldable electronic device in an unfolded state, when viewed from the rear, according to an embodiment of the disclosure.

According to various embodiments, the embodiments of the electronic device 101 disclosed in FIG. 1 may be included in the embodiments of the multi-foldable electronic device 200 disclosed in FIGS. 2A and 2B. For example, the multi-foldable electronic device 200 disclosed in FIGS. 2A and 2B may include a processor 120, a memory 130, an input module 150, a sound output module 155, a display module 160, an audio module 170, a sensor module 176, an interface 177, a connection terminal 178, a haptic module 179, a camera module 180, an antenna module 197, and/or a subscriber identification module 196, which are shown in FIG. 1.

Referring to FIGS. 2A and 2B, the multi-foldable electronic device 200 according to various embodiments of the disclosure may include a first housing 210, a second housing 220, a third housing 230, a first hinge member 201, a second hinge member 202, and/or a flexible display 240.

According to an embodiment, the first housing 210 may be foldably coupled to a first side of the second housing 220 (e.g., in the x-axis direction). The first hinge member 201 may be coupled between the first housing 210 and the second housing 220. The first hinge member 201 may be disposed such that the first housing 210 and the second housing 220 are foldable or unfoldable relative to each other. The first hinge member 201 may include a hinge device, a hinge module, a hinge plate, or a hinge assembly. The first housing 210 and the second housing 220 may be coupled to be rotatable about a first folding axis A1 using the first hinge member 201.

According to an embodiment, the second housing 220 may be foldably coupled to one side of the first housing 210 (e.g., in the -x-axis direction). The second housing 220 may be operatively coupled to at least a portion of the first housing 210 at a first side (e.g., in the x-axis direction) and operatively coupled to at least a portion of the third housing 230 at a second side (e.g., in the -x-axis direction).

According to an embodiment, the third housing 230 may be foldably coupled to a second side of the second housing 220 (e.g., in the -x-axis direction). The second hinge member 202 may be coupled between the second housing 220 and the third housing 230. The second hinge member 202 may be disposed such that the second housing 220 and the third housing 230 are foldable or unfoldable relative to each other. The second hinge member 202 may include a hinge device, a hinge module, a hinge plate, or a hinge assembly. The second housing 220 and the third housing 230 may be coupled to be rotatable about a second folding axis A2 using the second hinge member 202. According to various embodiments, one side of the third housing 230 (e.g., in the x-axis direction) may be foldably coupled to a second side of the second housing 220 (e.g., in the -x-axis direction).

According to an embodiment, in the multi-foldable electronic device 200, the first housing 210 may be folded first relative to the second housing 220 via the first hinge member 201, and then the third housing 230 may be folded relative to the second housing 220 via the second hinge member 202. For example, the first housing 210 may be folded relative to the second housing 220 via the first hinge member 201 in an in-folding manner. For example, the first housing 210 may be folded relative to the second housing 220 while rotating in the z-axis direction and the -x-axis direction via the first hinge member 201. For example, the third housing 230 may be folded relative to the second housing 220 via the second hinge member 202 in an in-folding manner. For example, the third housing 230 may be folded relative to the second housing 220 while rotating in the z-axis direction and the x-axis direction via the second hinge member 202.

According to an embodiment, the width W1 of the first housing 210 in the transverse direction (e.g., in the x-axis and -x-axis directions) may be configured to be smaller than the width W2 of the second housing 220 in the transverse direction (e.g., in the x-axis and -x-axis directions). The width W2 of the second housing 220 in the transverse direction (e.g., in the x-axis and -x-axis directions) may be configured to be substantially the same as the width W3 of the third housing 230 in the transverse direction (e.g., in the x-axis and -x-axis directions). According to various embodiments, the width W3 of the third housing 230 in the transverse direction (e.g., in the x-axis and -x-axis directions) may be configured to be larger than the width W2 of the second housing 220 in the transverse direction (e.g., in the x-axis and -x-axis directions).

According to an embodiment, the first housing 210 and the second housing 220 may be disposed on both sides of the first folding axis A1 where the first hinge member 201 is positioned, and may have an asymmetrical shape with respect to the first folding axis A1. According to various embodiments, the first housing 210 and the second housing 220 may also have a symmetrical shape with respect to the first folding axis A1. The angle and distance between the first housing 210 and the second housing 220 may vary depending on whether the multi-foldable electronic device 200 is in an unfolded state, a folded state, or an intermediate state.

According to an embodiment, the second housing 220 and the third housing 230 may be disposed on both sides of the second folding axis A2 where the second hinge member 202 is positioned, and may have a substantially symmetrical shape with respect to the second folding axis A2. According to various embodiments, the second housing 220 and the third housing 230 may also have an asymmetrical shape with respect to the second folding axis A2. The angle and distance between the second housing 220 and the third housing 230 may vary depending on whether the multi-foldable electronic device 200 is in an unfolded state, a folded state, or an intermediate state.

According to an embodiment, the width of the second hinge member 202 may be configured to be wider than the width of the first hinge member 201. For example, when the first housing 210 is folded relative to the second housing 220 and the third housing 230 is folded relative to the second housing 220 so that the third housing 230 is positioned on top of the first housing 210, the width of the second hinge member 202 may be configured to be wider than the width of the first hinge member 201. For example, the first hinge member 201 may be a first in-folding hinge, a slim hinge, or a small hinge having a narrower width than the second hinge member 202. For example, the second hinge member 202 may be a second in-folding hinge, a wide hinge, or a big hinge having a wider width than the first hinge member 201. In an embodiment, although the width of the second hinge member 202 is described as being wider than the width of the first hinge member 201, the disclosure is not limited thereto, and the width of the first hinge member 201 may be wider than the width of the second hinge member 202 depending on the type and/or operation of the multi-foldable electronic device 200.

According to an embodiment, the flexible display 240 may be disposed on the first housing 210, the second housing 220, and the third housing 230. For example, the flexible display 240 may be disposed across at least a portion of the front surfaces of the first housing 210, the second housing 220, and the third housing 230 (e.g., in the z-axis direction). The flexible display 240 may be a first display, a foldable display, or a main display. According to various embodiments, a subdisplay 250 may be disposed on the rear surface of the third housing 230 (e.g., in the -z-axis direction). The subdisplay 250 may be a second display or an auxiliary display.

In this document, the surface on which the flexible display 240 is disposed may be defined as the front surface of the multi-foldable electronic device 200 (e.g., in the z-axis direction), and the surface opposite the front surface may be defined as the back surface of the multi-foldable electronic device 200 (e.g., in the -z-axis direction). The surface surrounding the space between the front surface and the back surface may be defined as the lateral surface of the multi-foldable electronic device 200.

According to an embodiment, the flexible display 240 may include a first display area 240a disposed in the first housing 210, a second display area 240b disposed in the second housing 220, and a third display area 240c disposed in the third housing 230 (e.g., the front surface). The first display area 240a, the second display area 240b, and the third display area 240c may be formed integrally to form the flexible display 240. According to various embodiments, when the multi-foldable electronic device 200 is in an unfolded state, the flexible display 240 may be configured to be disposed over most of the front surface of the multi-foldable electronic device 200 (e.g., in the z-axis direction). At least a portion of the flexible display 240 may be transformed into a flat or curved surface. The division of the first display area 240a, the second display area 240b, and the third display area 240c of the flexible display 240 may be an exemplary physical division. The flexible display 240 may be formed as a seamless full screen. According to an embodiment, the sub-display 250 may include a fourth display area 250d. For example, the sub-display 250 may be disposed on the rear surface of the third housing 230 (e.g., in the -z-axis direction).

According to various embodiments, the flexible display 240 and the sub-display 250 may be electrically connected to a processor (e.g., the processor 120 in FIG. 1). The processor 120 may display substantially the same or different user interfaces (UIs) or applications (e.g., execution screens of applications) using at least one of the first display area 240a, the second display area 240b, and the third display area 240c of the flexible display 240 and the fourth display area 250d of the sub-display 250. For example, the first display area 240a may display a first user interface or a first application (e.g., a first application execution screen). The second display area 240b may display a second user interface or a second application (e.g., a second application execution screen). The third display area 240c may display a third user interface or a third application (e.g., a third application execution screen). The fourth display area 250d may display a fourth user interface or a fourth application (e.g., a fourth application execution screen). For example, the first user interface (e.g., the first application), the second user interface (e.g., the second application), the third user interface (e.g., the third application), or the fourth user interface (e.g., the fourth application) may each include any one of an image, text, a video, and a virtual keyboard. According to an embodiment, the user interface may include an execution screen of an application.

According to various embodiments, when the multi-foldable electronic device 200 is in an unfolded state, the first housing 210 may include a first surface 211 connected to at least a portion of the first hinge member 201 and disposed to face the front of the multi-foldable electronic device 200, a second surface 212 facing the opposite direction to the first surface 211, and/or a first lateral member 213 surrounding at least a portion of a first space between the first surface 211 and the second surface 212.

According to various embodiments, when the multi-foldable electronic device 200 is in the unfolded state, the second housing 220 may include a third surface 221 connected to at least a portion of the first hinge member 201 and second hinge member 202 and disposed to face the front of the multi-foldable electronic device 200, a fourth surface 222 facing the opposite direction to the third surface 221, and/or a second lateral member 223 surrounding at least a portion of a second space between the third surface 221 and the fourth surface 222.

According to various embodiments, when the multi-foldable electronic device 200 is in the unfolded state, the third housing 230 may include a fifth surface 231 connected to at least a portion of the second hinge member 202 and disposed to face the front of the multi-foldable electronic device 200, a sixth surface 232 facing the opposite direction to the fifth surface 231, and/or a third lateral member 233 surrounding at least a portion of a third space between the fifth surface 231 and the sixth surface 232.

According to various embodiments, when the multi-foldable electronic device 200 is in the unfolded state, the first surface 211, the third surface 221, and the fifth surface 231 may face substantially the same direction (e.g., the z-axis direction). When the multi-foldable electronic device 200 is in the unfolded, the second surface 212, the fourth surface 222, and the sixth surface 232 may face substantially the same direction (e.g., the -z-axis direction).

According to various embodiments, when the first housing 210 and the second housing 220 of the multi-foldable electronic device 200 are in a folded state, the first surface 211 and the third surface 221 may be disposed to face each other. When the second housing 220 and the third housing 230 of the multi-foldable electronic device 200 are in a folded state, the third surface 221 and the fifth surface 231 may be disposed to face each other.

According to various embodiments, the multi-foldable electronic device 200 may include a recess 245 formed to accommodate the flexible display 240 through a structural combination of the first housing 210, the second housing 220, and the third housing 230. The recess 245 may have substantially the same size as the flexible display 240.

According to various embodiments, when the multi-foldable electronic device 200 is in an unfolded state, the first housing 210, the second housing 220, and the third housing 230 may form an angle of approximately 180 degrees, and the first display area 240a, the second display area 240b, and the third display area 240c of the flexible display 240 may be arranged to form substantially the same plane and face substantially the same direction (e.g., the z-axis direction). In this case, the fourth display area 250d of the sub-display 250 may be disposed to face the opposite direction to the third display area 240c.

According to various embodiments, the first housing 210 and the second housing 220 may form an angle that may stop at a specified folding angle between a folded state and an unfolded state using the first hinge member 201 (e.g., a free stop function). In various embodiments, the first housing 210 may be rotated to move toward the rear surface of the second housing 220 while being pressed in the unfolding direction (e.g., in the -z-axis direction), based on a specified inflection angle, using the first hinge member 201.

According to various embodiments, the second housing 220 and the third housing 230 may form an angle that may stop at a specified folding angle between a folded state and an unfolded state using the second hinge member 202. In various embodiments, the third housing 230 may be rotated toward the rear surface of the second housing 220 while being pressed in an unfolding direction (e.g., in the -z-axis direction), based on a specified inflection angle, using the second hinge member 202.

According to various embodiments, the flexible display 240 may be disposed to be supported by the first surface 211 of the first housing 210, the first hinge member 201, the third surface 221 of the second housing 220, the second hinge member 202, and the fifth surface 231 of the third housing 230. In an embodiment, the sub-display 250 (e.g., the fourth display area 250d) may be disposed within the internal space of the third housing 230 so as to be at least partially visible from the outside through the sixth surface 232. In various embodiments, the sub-display 250 may also be disposed within the internal space of the first housing 210 so as to be visible from the outside through the second surface 212.

According to an embodiment, the flexible display 240 may be primarily used when the multi-foldable electronic device 200 is in an unfolded state, and the sub-display 250 may be primarily used when the foldable electronic device 200 is in a folded state.

According to an embodiment, the multi-foldable electronic device 200 may include a first rear cover 270 disposed on the second surface 212 of the first housing 210, a second rear cover 280 disposed on the fourth surface 222 of the second housing 220, and a third rear cover 290 disposed on the sixth surface 232 of the third housing 230. In various embodiments, at least a portion of the first rear cover 270 may be integrally formed with a portion of the first lateral member 213. In various embodiments, at least a portion of the second rear cover 280 may be integrally formed with a portion of the second lateral member 223. In various embodiments, at least a portion of the third rear cover 290 may be integrally formed with a portion of the third lateral member 233. According to an embodiment, at least one of the first rear cover 270, the second rear cover 280, and the third rear cover 290 may be configured as a substantially transparent plate (e.g., a glass plate including various coating layers, or a polymer plate) or an opaque plate.

According to various embodiments, the first rear cover 270 may be formed of an opaque plate, such as coated or tinted glass, ceramic, polymer, metal (e.g., aluminum, stainless steel (STS), or magnesium), or a combination of at least two of the foregoing materials. According to various embodiments, the second rear cover 280 may be formed of an opaque plate, such as coated or tinted glass, ceramic, polymer, metal (e.g., aluminum, stainless steel (STS), or magnesium), or a combination of at least two of the foregoing materials. According to various embodiments, the third rear cover 290 may be formed of a substantially transparent plate, such as glass or polymer. In this case, the sub-display 250 (e.g., the fourth display area 250d) may be disposed in the internal space of the third housing 230 so as to be visible from the outside through the third rear cover 290.

According to various embodiments, the multi-foldable electronic device 200 may include at least one of an input module 261, audio output modules 263 and 265, sensor modules 267a, 267b, and 267c, camera modules 271a, 271b, and 271c, a key input device 273, an indicator (not shown), or a connector port 275. In various embodiments, the multi-foldable electronic device 200 may exclude at least one of the above-described components or may further include at least one other component.

According to an embodiment, the input module 261 may include at least one microphone disposed to detect the direction of sound. The input module 261 may include the input module 150 disclosed in FIG. 1.

According to an embodiment, the audio output modules 263 and 265 may include at least one speaker. The audio output modules 263 and 265 may include a call receiver disposed through the sixth surface 232 of the third housing 230 and/or a speaker disposed in at least a part of the upper portion (e.g., in the y-axis direction) and lower portion (e.g., in the -y-axis direction) of the third lateral member 233 of the third housing 230. The audio output modules 263 and 265 may include the sound output module 155 disclosed in FIG. 1.

According to an embodiment, the input module 261, the audio output modules 263 and 265, and the connector port 275 may be disposed in the space of the first housing 210, the second housing 220, and/or the third housing 230, and may be exposed to the external environment through at least one hole formed in the first housing 210, the second housing 220, and/or the third housing 230. In an embodiment, the holes formed in the first housing 210, the second housing 220, and/or the third housing 230 may be used in common for the input module 261 and the audio output modules 263 and 265. In an embodiment, the audio output modules 263 and 265 may include a speaker (e.g., a piezo speaker) that operates without the holes formed in the first housing 210 and/or the third housing 230.

According to various embodiments, the camera modules 271a, 271b, and 271c may include a first camera module 271a disposed on the third surface 221 of the second housing 220, a second camera module 271b disposed on the fourth surface 222 of the second housing 220, and/or a third camera module 271c disposed on the sixth surface 232 of the third housing 230. According to an embodiment, the multi-foldable electronic device 200 may include a flash 295 disposed near the second camera module 271b. The flash 295 may include, for example, a light-emitting diode or a xenon lamp. According to an embodiment, the camera modules 271a, 271b, and 271c may include one or more lenses, an image sensor, and/or an image signal processor. In an embodiment, at least one of the camera modules 271a, 271b, and 271c may include two or more lenses (e.g., wide-angle and telephoto lenses) and image sensors, and may be disposed together on one surface of the first housing 210, the second housing 220, and/or the third housing 230. For example, the camera modules 271a, 271b, and 271c may include the camera module 180 disclosed in FIG. 1.

According to an embodiment, the sensor modules 267a, 267b, and 267c may generate electrical signals or data values corresponding to the internal operating state of the multi-foldable electronic device 200 or the external environmental state. According to various embodiments, the sensor modules 267a, 267b, and 267c may include a first sensor module 267a disposed on the third surface 221 of the second housing 220, a second sensor module 267b disposed on the fourth surface 222 of the second housing 220, and/or a third sensor module 267c disposed on the sixth surface 232 of the third housing 230. For example, the sensor modules 267a, 267b, and 267c may include the sensor module 176 disclosed in FIG. 1.

According to various embodiments, the multi-foldable electronic device 200 may further include sensor modules that are not shown, for example, at least one of a 6-axis sensor (e.g., an acceleration sensor and a gyro sensor), an angle detection sensor, a Hall sensor, an angular velocity sensor, a folding and unfolding detection sensor, a proximity sensor, a barometric pressure sensor, a magnetic sensor, a biometric sensor, a temperature sensor, a humidity sensor, a gesture sensor, a grip sensor, a color sensor, an infrared (IR) sensor, an illuminance sensor, an ultrasonic sensor, an iris recognition sensor, a distance detection sensor (e.g., a time-of-flight (TOF) sensor or a light detection and ranging (LiDAR) sensor), and a fingerprint recognition sensor.

According to an embodiment, the key input device 273 may be disposed to be exposed to the outside through the first lateral member 213 of the first housing 210. In an embodiment, the key input device 273 may also be disposed to be exposed to the outside through the third lateral member 233 of the third housing 230. In an embodiment, the multi-foldable electronic device 200 may exclude the entirety or some of the key input device 273, and the excluded key input device 273 may be implemented in other forms, such as soft keys, on at least one display 240 or 250. In various embodiments, the key input device 273 may be implemented using a pressure sensor included in at least one display 240 or 250. In an embodiment, the key input device 273 may include a power button and/or a volume control button of the foldable electronic device 200.

According to an embodiment, the connector port 275 may include a connector (e.g., a USB connector or an interface (IF) module (interface connector port module)) for transmitting and receiving power and/or data to and from an external electronic device (e.g., the external electronic devices 102, 104, and 108 in FIG. 1). In an embodiment, the connector port 275 may also perform a function for transmitting and receiving audio signals to and from an external electronic device, or may further include a separate connector port (e.g., an ear jack hole) for transmitting and receiving audio signals. For example, the connector port 275 may include the connecting terminal 178 disclosed in FIG. 1.

According to various embodiments, at least one camera module 271a or 271c of the camera modules 271a, 271b, and 271c, at least one sensor module 267a or 267c of the sensor modules 267a, 267b, and 267c, and/or an indicator may be disposed to be exposed through at least one display 240 or 250. For example, at least one camera module 271a or 271c, at least one sensor module 267a or 267c, and/or an indicator may be disposed under the active area (display area) of at least one display 240 or 250 in the inner space of at least one housing 210, 220, or 230 so as to be in contact with the external environment through an opening formed up to the cover member (e.g., a window layer (not shown) of the flexible display 240 and/or the second rear cover 290) or a transparent area.

According to various embodiments, the multi-foldable electronic device 200 disclosed below may include at least some of the embodiments described in FIGS. 1 to 2B. Embodiments related to the multi-foldable electronic device 200 disclosed below may be integrated and applied to the embodiments described in the multi-foldable electronic device 200 in FIGS. 2A and 2B. In the description of various embodiments of the disclosure disclosed below, components substantially identical to those disclosed in the embodiments disclosed in FIGS. 1 to 2B will be assigned the same reference numerals, and redundant descriptions of their functions will be omitted.

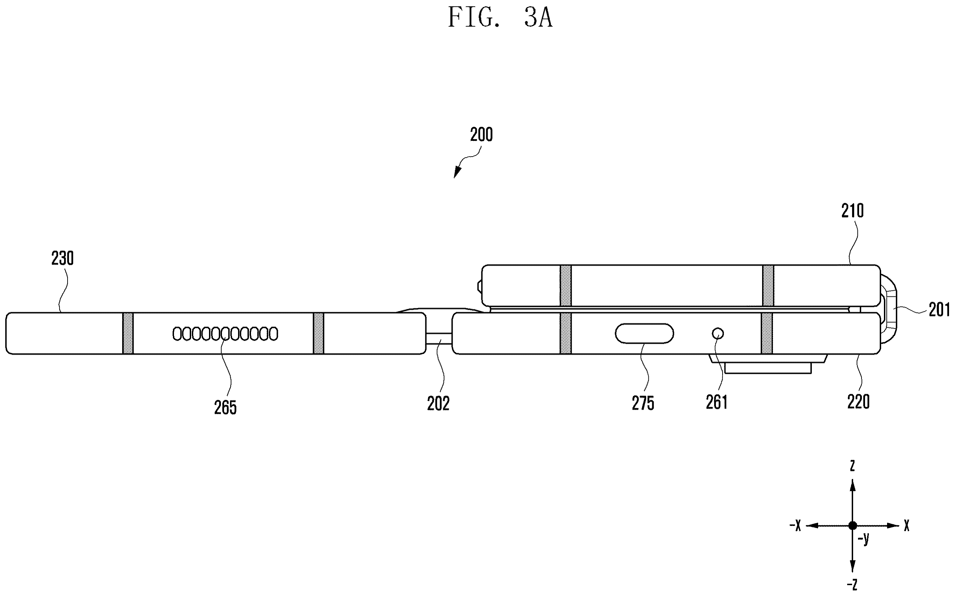

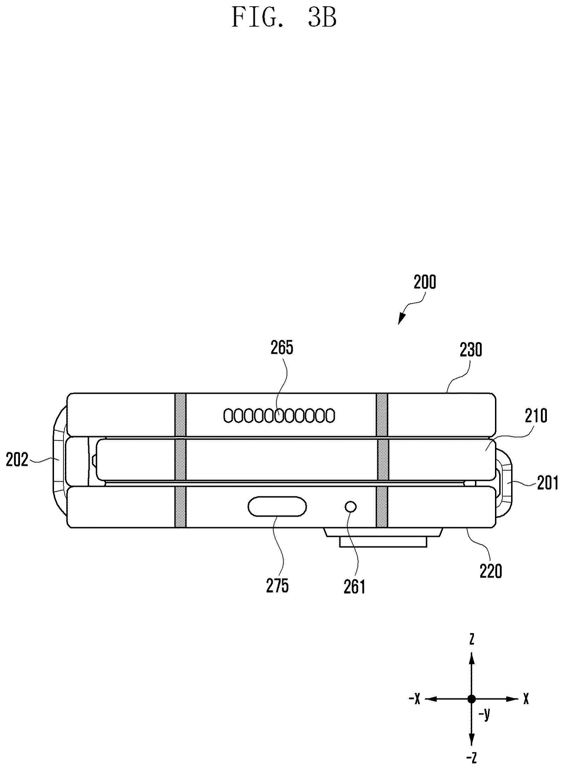

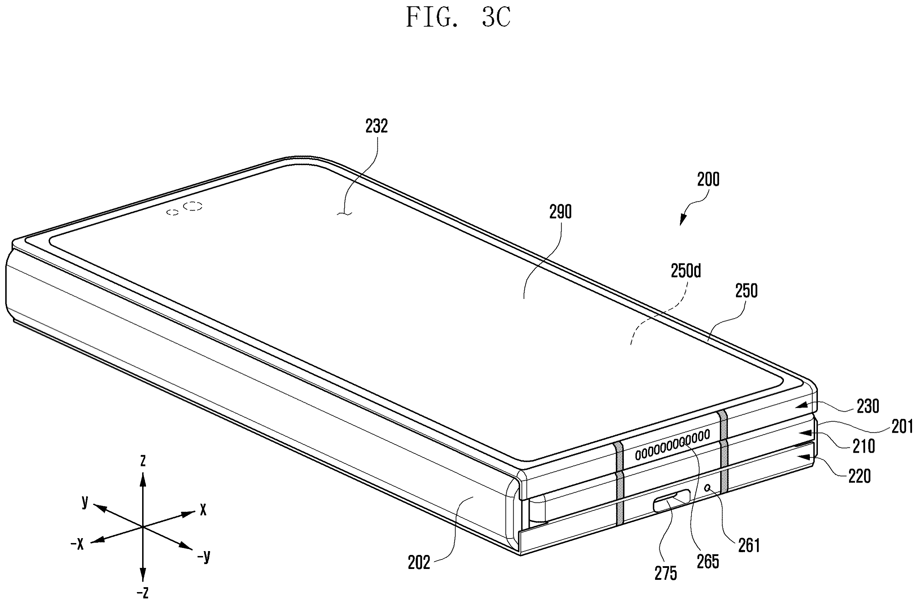

FIG. 3A is a schematic diagram of a multi-foldable electronic device in a folded state of a first housing relative to a second housing according to an embodiment of the disclosure. FIG. 3B is a schematic diagram of a multi-foldable electronic device in a folded state of a first housing and a third housing relative to a second housing according to an embodiment of the disclosure. FIG. 3C is a schematic perspective view of a multi-foldable electronic device in a folded state of a first housing and a third housing relative to a second housing, when viewed from one direction, according to an embodiment of the disclosure.

According to an embodiment, FIG. 3A may be a drawing showing a state, when viewed from the -y-axis direction, in which the first housing 210 of the multi-foldable electronic device 200 is folded toward the second housing 220. According to an embodiment, FIG. 3B may be a drawing showing a state, when viewed from the -y-axis direction, in which the first housing 210 of the multi-foldable electronic device 200 is first folded toward the second housing 220, and then the third housing 230 is folded toward the second housing 220. According to an embodiment, FIG. 3C may be a perspective view schematically illustrating a state in which at least a portion of the sub-display 250 is exposed to the outside, with the first housing 210 and the third housing 230 of the multi-foldable electronic device 200 folded toward the second housing 220. For example, the multi-foldable electronic device 200 disclosed in FIGS. 3A and 3C may be folded into a G-type configuration.

Referring to FIGS. 3A to 3C, the multi-foldable electronic device 200 may include a first housing 210, a second housing 220, a third housing 230, a first hinge member 201, and a second hinge member 202.

According to an embodiment, the first housing 210 may be first folded onto the top of the second housing 220 (e.g., in the z-axis direction) via the first hinge member 201 (e.g., a first in-folding hinge).

According to an embodiment, after the first housing 210 is folded toward the second housing 220 via the first hinge member 201, the third housing 230 may be folded toward the second housing 220 via the second hinge member 202 (e.g., a second in-folding hinge) and may be placed on the top (e.g., in the z-axis direction) of the first housing 210.

According to an embodiment, the first hinge member 201 may have a first width. The second hinge member 202 may have a second width. For example, the second width may be wider than the first width. According to various embodiments, since the first housing 210 is folded relative to the second housing 220 and the third housing 230 is folded relative to the second housing 220, so that the third housing 230 must be placed on the top of the first housing 210 (e.g., in the z-axis direction), the second width of the second hinge member 202 may be configured to be wider than the first width of the first hinge member 201. For example, the first hinge member 201 may include a first in-folding hinge, slim hinge, or small hinge having a narrower width than the second hinge member 202. For example, the second hinge member 202 may include a second in-folding hinge, wide hinge, or big hinge having a wider width than the first hinge member 201.

According to an embodiment, when the first housing 210 is folded relative to the second housing 220 via the first hinge member 201 (e.g., an in-folding hinge), and then the third housing 230 is folded toward the second housing 220 via the second hinge member 202 (e.g., an in-folding hinge) such that the third housing 230 is placed on the top of the first housing 210 (e.g., in the z-axis direction), at least a portion of the sub-display 250 (e.g., the fourth display area 250d) supported by the sixth surface 232 of the third housing 230 may be visually exposed to a user of the multi-foldable electronic device 200.

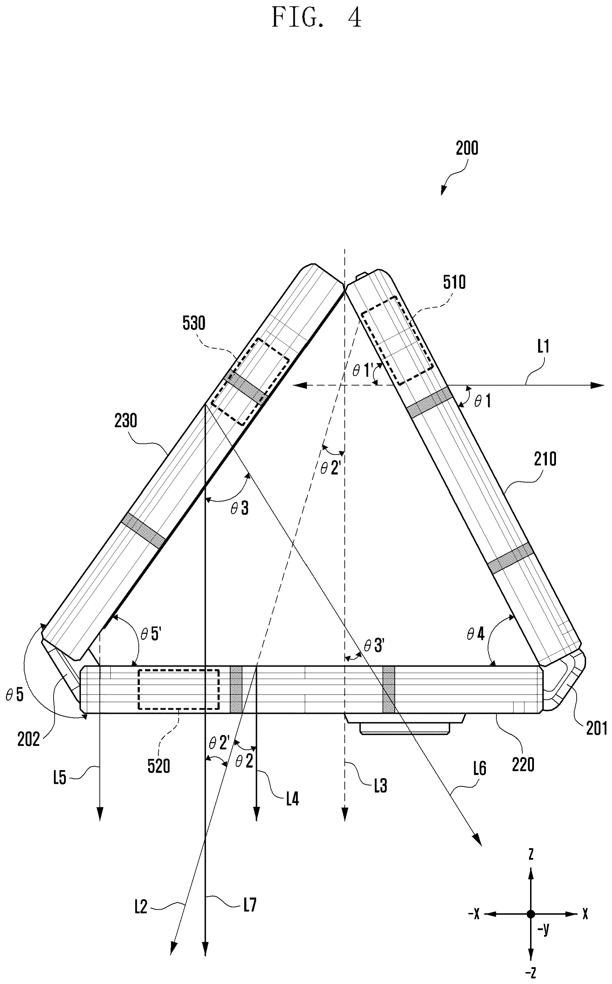

FIG. 4 is a diagram illustrating an embodiment of calculating angle among a first housing, a second housing, and a third housing using a first sensor, a second sensor, and a third sensor of a multi-foldable electronic device according to an embodiment of the disclosure.

Referring to FIG. 4, a multi-foldable electronic device 200 according to an embodiment of the disclosure may include a first housing 210, a first hinge member 201, a second housing 220, a second hinge member 202, and a third housing 230.

According to an embodiment, a first angle (e.g., $\theta 4$) between the first housing 210 and the second housing 220 may be detected using a first sensor 510 disposed in the first housing 210 and a second sensor 520 disposed in the second housing 220.

According to an embodiment, a second angle (e.g., $\theta 5$ or $\theta 5'$) between the second housing 220 and the third housing 230 may be detected using the second sensor 520 disposed in the second housing 220 and a third sensor 530 disposed in the third housing 230.

According to an embodiment, when the first housing 210 is disposed perpendicularly (e.g., between the -x-axis direction and the z-axis direction) with respect to the gravity direction (e.g., the -z-axis direction), with a first virtual line L1 extending in the x-axis and -x-axis directions and a third virtual line L3 extending in the z-axis and -z-axis directions, the first housing 210 may form a 1-1st angle $\theta 1$ with the first virtual line L1 and a 1-2nd angle $\theta 1'$ with the third virtual line L3. The 1-1st angle $\theta 1$ and the 1-2nd angle $\theta 1'$ may be substantially the same.

According to an embodiment, the first housing 210 may be folded relative to the second housing 220 in an in-folding manner using the first hinge member 201. For example, the second housing 220 may be disposed in the x-axis and -x-axis directions perpendicular to the gravity direction (e.g., the -z-axis direction). For example, a second virtual line L2 may exist between the -x-axis direction and the -z-axis direction or between the x-axis direction and the z-axis direction in FIG. 4. For example, a fourth virtual line L4 may exist at a point on the second housing 220 in the gravity direction (e.g., the -z-axis direction). For example, a fifth virtual line L5 may exist at a point of the third housing 230 in the gravity direction (e.g., the -z-axis direction). For example, a sixth virtual line L6 may exist between the -z-axis direction and the -x-axis direction, or between the -x-axis direction and the z-axis direction, based on the third housing 230. For example, a seventh virtual line L7 may exist at a point of the third housing 230 in the gravity direction (e.g., the -z-axis direction). For example, a 2-1st angle θ2 may be formed between the second virtual line L2 and the fourth virtual line L4, and a 2-2nd angle θ2' may be formed between the second virtual line L2 and the seventh virtual line L7 and between the second virtual line L2 and the third virtual line L3. The 2-1st angle θ2 and the 2-2nd angle θ2' may be substantially the same.

According to an embodiment, a 3-1st angle θ3 may be formed between the sixth virtual line L6 and the seventh virtual line L7, and a 3-2nd angle θ3' may be formed between the third virtual line L3 and the sixth virtual line L6. The 3-1st angle θ3 and the 3-2nd angle θ3' may be substantially the same.

According to an embodiment, when the first housing 210 and the second housing 220 are folded using the first hinge member 201, a first angle θ4 may be formed between the first housing 210 and the second housing 220. The first angle θ4 between the first housing 210 and the second housing 220 may be detected using the first sensor 510 disposed in the first housing 210 and the second sensor 520 disposed in the second housing 220.

For example, the first angle θ4 between the first housing 210 and the second housing 220 may be calculated using the following Equation 1.

[Equation 1]

$$360 = 90 + 90 + (\theta1' + \theta2') + \theta4,$$

$$\Rightarrow \theta4 = 360 - \{90 + 90 + (\theta1' + \theta2')\}$$

According to an embodiment, when the second housing 220 and the third housing 230 are folded using the second hinge member 202, a second angle θ5 or θ5' may be formed between the second housing 220 and the third housing 230. For example, the second angle θ5 or θ5' may include an angle θ5 formed on the outer side between the second housing 220 and the third housing 230, and an angle θ5' formed on the inner side between the second housing 220 and the third housing 230. For example, the second angle θ5 or θ5' formed between the second housing 220 and the third housing 230 may be detected using the second sensor 520 disposed in the second housing 220 and the third sensor 530 disposed in the third housing 230.

For example, the second angle θ5 or θ5' between the second housing 220 and the third housing 230 may be calculated using the following Equation 2.

[Equation 2]

$$360 = 90 + 90 + (\theta2' + \theta3') + \theta5'$$

$$\Rightarrow \theta5' = 360 - \{90 + 90 + (\theta2' + \theta3')\}$$

$$\Rightarrow \theta5 = 360 - \theta5'$$

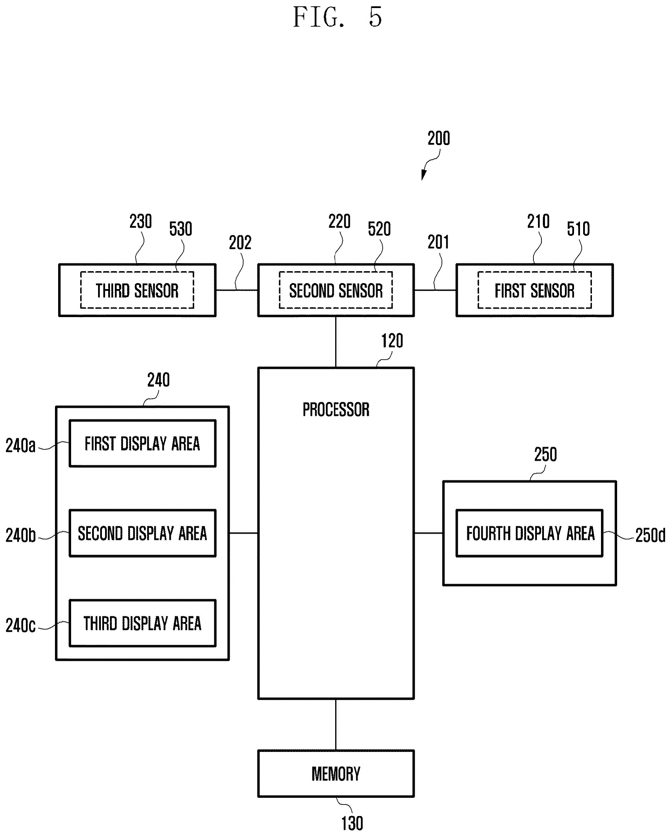

FIG. 5 is a block diagram schematically illustrating the configuration of a multi-foldable electronic device according to an embodiment of the disclosure.

According to an embodiment, the components disclosed in the multi-foldable electronic device 200 in FIG. 5 may be included in at least one of the first housing 210, the second housing 220, and the third housing 230 disclosed in FIGS. 2A to 4.

Referring to FIG. 5, the multi-foldable electronic device 200 may include a first sensor 510, a second sensor 520, a third sensor 530, a flexible display 240, a sub-display 250, a memory 130, and/or a processor 120.

According to various embodiments, the first sensor 510, the second sensor 520, the third sensor 530, the flexible display 240, the sub-display 250, the memory 130, and the processor 120 may be electrically or operatively connected.

According to an embodiment, the first sensor 510 may be disposed in the first housing 210. The first sensor 510 may detect an angle (e.g., a folding angle and an unfolding angle) between the first housing 210 and the second housing 220 and transmit the detected angle information to the processor 120. For example, when the first housing 210 and the second housing 220 are folded or unfolded via the first hinge member 201, the first sensor 510 may detect the angle between the first housing 210 and the second housing 220. For example, the first sensor 510 may include a 6-axis sensor. The first sensor 510 may include an acceleration sensor and a gyro sensor. The acceleration sensor may sense an angle (e.g., an inclination angle) at which the first housing 210 and/or the second housing 220 are tilted with respect to the gravity direction (e.g., the ground). The gyro sensor may sense the angular velocity of the first housing 210 and/or the second housing 220. The gyro sensor may sense the rotational speed or rotational angle of the first housing 210 and/or the second housing 220. The first sensor 510 may be configured by integrating the acceleration sensor and the gyro sensor. According to various embodiments, the first hinge member 201 may include a hinge (e.g., a first in-folding hinge) that allows the first housing 210 and the second housing 220 to fold in an in-folding manner.

According to an embodiment, the second sensor 520 may be disposed in the second housing 220. The second sensor 520 may detect an angle (e.g., a folding angle and an unfolding angle) between the first housing 210 and the second housing 220 and transmit the detected angle information to the processor 120. For example, when the first housing 210 and the second housing 220 are folded or unfolded via the first hinge member 201, the first sensor 510 may detect the angle between the first housing 210 and the second housing 220. The second sensor 520 may detect an angle (e.g., a folding angle and an unfolding angle) between the second housing 220 and the third housing 230 and transmit the detected angle information to the processor 120. For example, when the second housing 220 and the third housing 230 are folded or unfolded via the second hinge member 202, the second sensor 520 may detect the angle between the second housing 220 and the third housing 230. For example, the second sensor 520 may include a 6-axis sensor. The second sensor 520 may include an acceleration sensor and a gyro sensor. The acceleration sensor may sense an angle (e.g., an inclination angle) at which the first housing 210, the second housing 220, and/or the third housing 230 are tilted with respect to the gravity direction (e.g., the ground). The gyro sensor may sense the angular velocity of the first housing 210, the second housing 220, and/or the third housing 230. The gyro sensor may sense the rotational speed or rotational angle of the first housing 210, the second housing 220, and/or the third housing 230. The second sensor 520 may be configured by integrating the acceleration sensor and the gyro sensor.

According to various embodiments, the first sensor 510 and the second sensor 520 may detect a first angle between the first housing 210 and the second housing 220 and transmit the detected first angle to the processor 120.

According to an embodiment, the third sensor 530 may be disposed in the third housing 230. The third sensor 530 may detect an angle (e.g., a folding angle and an unfolding angle) between the second housing 220 and the third housing 230 and transmit the detected angle information to the processor 120. For example, when the second housing 220 and the third housing 230 are folded or unfolded via the second hinge member 202, the third sensor 530 may detect the angle between the second housing 220 and the third housing 230. For example, the third sensor 530 may include a 6-axis sensor. The third sensor 530 may include an acceleration sensor and a gyro sensor. The acceleration sensor may sense an angle at which the second housing 220 and/or the third housing 230 are tilted with respect to the gravity direction (e.g., the ground). The gyro sensor may sense the angular velocity of the second housing 220 and/or the second housing 230. The gyro sensor may sense the rotational speed or rotational angle of the second housing 220 and/or the third housing 230. The third sensor 530 may be configured by integrating the acceleration sensor and the gyro sensor. According to various embodiments, the second hinge member 202 may include a hinge (e.g., a second in-folding hinge) that allows the second housing 220 and the third housing 230 to fold in an in-folding manner.

According to various embodiments, the second sensor 520 and the third sensor 530 may detect a second angle between the second housing 220 and the third housing 230 and transmit the detected second angle to the processor 120.

According to various embodiments, the processor 120 may calculate a first angle between the first housing 210 and the second housing 220, and a second angle between the second housing 220 and the third housing 230. The processor 120 may identify the usage state (e.g., an arrangement state or placed state) or usage mode of the first housing 210, the second housing 220, and/or the third housing 230, based on the first angle between the first housing 210 and the second housing 220 and the second angle between the second housing 220 and the third housing 230. The processor 120 may be configured to display a user interface (e.g., a first user interface, a second user interface, a third user interface, and/or a fourth user interface) on at least one of the first display area 240a, the second display area 240b, and the third display area 240c of the flexible display 240 and the fourth display area 250d of the sub-display 250, based on the usage state (e.g., an arrangement state or placed state) or usage mode of the first housing 210, the second housing 220, and/or the third housing 230. The processor 120 may be configured to display an application or an execution screen of the application on at least one of the first display area 240a, the second display area 240b, and the third display area 240c of the flexible display 240 and the fourth display area 250d of the sub-display 250, based on the usage state (e.g., an arrangement state or placed state) or usage mode of the first housing 210, the second housing 220 and/or the third housing 230.

According to various embodiments, the first sensor 510, the second sensor 520 and the third sensor 530 are not limited to the sensors (e.g., a 6-axis sensor, an acceleration sensor, or a gyro sensor) described above, and various other sensors may be used as long as they can detect angles among the first housing 210, the second housing 220 and the third housing 230. For example, the first sensor 510, the second sensor 520, and the third sensor 530 may each include an angle sensor, a Hall sensor, a folding and unfolding measurement sensor, an angular velocity sensor, a motion sensor, or a proximity sensor.

According to various embodiments, the first angle between the first housing 210 and the second housing 220 and the second angle between the second housing 220 and the third housing 230 may refer to values converted from output values detected by the first sensor 510, the second sensor 520, and/or the third sensor 530. For example, output values detected by the first sensor 510, the second sensor 520, and/or the third sensor 530 may include values (e.g., magnetic field, voltage, current, resistance, and/or signal magnitude) by which the angle can be estimated even without being converted into angle information (e.g., angle values). According to various embodiments, the angle information (e.g., the first angle and the second angle) may include tilt information (e.g., inclination information) of the multi-foldable electronic device 200.

According to various embodiments, at least one of the first sensor 510, the second sensor 520, and the third sensor 530 may detect rotation information and/or tilt information (e.g., inclination information) of the multi-foldable electronic device 200. For example, at least one of the first sensor 510, the second sensor 520, and the third sensor 530 may detect whether the multi-foldable electronic device 200 is unfolded in a horizontal state with respect to the gravity direction (e.g., the ground) or is erected in a vertical state with respect to the gravity direction. For example, at least one of the first sensor 510, the second sensor 520, and the third sensor 530 may detect the usage state (e.g., usage mode), arrangement state, and/or placed state of the first housing 210, the second housing 220, and/or the third housing 230.

According to an embodiment, the flexible display 240 (e.g., a first display or main display) may include a first display area 240a, a second display area 240b, and a third display area 240c. The flexible display 240 may display substantially the same or different user interfaces or applications on the first display area 240a, the second display area 240b, and the third display area 240c under the control of the processor 120. For example, the first display area 240a may display a first user interface (e.g., a first application). The second display area 240b may display a second user interface (e.g., a second application). The third display area 240c may display a third user interface (e.g., a third application).

According to an embodiment, the sub-display 250 (e.g., a second display or auxiliary display) may include a fourth display area 250d. The sub-display 250 may display a user interface or application (e.g., an execution screen of the application) that is substantially the same as or different from the first display area 240a, the second display area 240b, and the third display area 240c under the control of the processor 120. For example, the fourth display area 250d may display a fourth user interface or a fourth application (e.g., an execution screen of the fourth application).

According to various embodiments, the flexible display 240 and/or the sub-display 250 may display the initial screen, configuration screen, and/or execution screens of various applications of the multi-foldable electronic device 200. The flexible display 240 and/or the sub-display 250 may provide a user interface (UI) or application capable of providing various services to the user of the multi-foldable electronic device 200. For example, the flexible display 240 and/or sub-display 250 may provide a screen for configuring the functions and operations of a specified application via the input module 150.

According to various embodiments, the flexible display 240 and/or sub-display 250 may perform a display function and an input function. The flexible display 240 and/or sub-display 250 may include a display and a touch circuit to perform the display function and the input function. The display may visually provide the user with menus, input data, function configuration information, and various other information of the multi-foldable electronic device 200. The display may include at least one of a liquid crystal display (LCD), an organic light-emitting diode (OLED), and an active matrix organic light-emitting diode (AMOLED). The touch circuit may include a touch sensor or pressure sensor, such as a capacitive overlay, a resistive overlay, or an infrared beam.

According to an embodiment, the memory 130 may store user interfaces (UIs) and/or application execution screens (e.g., applications) capable of providing various services to the user of the multi-foldable electronic device 200. The memory 130 may store information that provides various user interfaces (UIs) or application execution screens depending on the folded or unfolded state of the first housing 210, the second housing 220, and/or the third housing 230 of the multi-foldable electronic device 200. For example, the memory 130 may store user interfaces (UIs) and/or applications that may be provided depending on the folding or unfolding angle of the first housing 210, the second housing 220, and/or the third housing 230.

According to various embodiments, the memory 130 may store the initial screen, configuration screen, and/or various applications of the multi-foldable electronic device 200 provided through the flexible display 240 and/or the sub-display 250. The memory 130 may perform a function of storing a program (e.g., the program 140 in FIG. 1) for processing and controlling the processor 120, an operating system (e.g., the operating system 142 in FIG. 1), various applications, and input/output data. The memory 130 may store a program to control the overall operation of the multi-foldable electronic device 200. The memory 130 may store various configuration information required for function processing in the multi-foldable electronic device 200. The memory 130 may store at least one executable instruction.

According to an embodiment, the processor 120 may be operatively connected to the first sensor 510, the second sensor 520, the third sensor 530, the flexible display 240, the sub-display 250, and the memory 130. The processor 120 may control the functions and operations of the first sensor 510, the second sensor 520, the third sensor 530, the flexible display 240, the sub-display 250, and the memory 130. The processor 120 may be configured to access the memory 130 and execute at least one instruction. The multi-foldable electronic device 200 may include at least one processor 120.

According to an embodiment, the processor 120 may detect and/or calculate a first angle between the first housing 210 and the second housing 220 using the first sensor 510 and the second sensor 520. The processor 120 may detect and/or calculate a second angle between the second housing 220 and the third housing 230 using the second sensor 520 and the third sensor 530. The processor 120 may identify the usage state (e.g., the arrangement state or placed state) or usage mode of the first housing 210, the second housing 220, and the third housing 230, based on the first angle and the second angle. The processor 120 may display a user interface and/or application (e.g., application execution screen) on at least one of the first display area 240a, the second display area 240b, and the third display area 240c of the flexible display 240 and the fourth display area 250d of the sub-display 250, based on the usage state or usage mode of the first housing 210, the second housing 220, and the third housing 230.

According to an embodiment, when the first housing 210 and the second housing 220 are in an unfolded state (e.g., at about 180° with respect to the ground) and the third housing 230 is folded at a first specified angle (e.g., about 100° to 140°) relative to the second housing 220, the processor 120 may display a first user interface (e.g., a first application) on the first display area 240a, a second user interface (e.g., a second application) on the second display area 240b, and a third user interface (e.g., a third application) on the third display area 240c. For example, the third user interface may be different from the first user interface and/or the second user interface. For example, the third user interface may be identical to the first user interface and the second user interface.

According to an embodiment, when the first housing 210 and the second housing 220 are in an unfolded state (e.g., at approximately 180° with respect to the ground), and the third housing 230 is folded at a second specified angle (e.g., approximately 80° to 100°) relative to the second housing 220, the processor 120 may display a third user interface (e.g., a third application) on the third display area 240c and display the third user interface on the fourth display area 250d. For example, the application may include an execution screen of the application.

For example, when the first housing 210 and the second housing 220 are in an unfolded state and the third housing 230 is folded at a second specified angle (e.g., about 80° to 100°) relative to the second housing 220, the processor 120 may display substantially the same user interface (e.g., a third user interface or a third application) on the third display area 240c and fourth display area 250d.

According to an embodiment, when the first housing 210 and the second housing 220 are folded at a specified angle (e.g., about 60°), and the second housing 220 and the third housing 230 are folded at a specified angle (e.g., about 60°) so that the first housing 210, the second housing 220, and the third housing 230 are folded into a substantially triangular shape, the processor 120 may display a fourth user interface on the fourth display area 250d. When the first housing 210 and the second housing 220 are folded at a specified angle (e.g., about 60°), and the second housing 220 and the third housing 230 are folded at a specified angle (e.g., about 60°) so that the first housing 210, the second housing 220, and the third housing 230 are folded into a substantially triangular shape, the processor 120 may not display a user interface and/or an application on the first display area 240a, the second display area 240b, and the third display area 240c.

According to an embodiment, when the third housing 230 is further folded at a specified angle relative to the second housing 220 in the state in which the first housing 210, the second housing 220, and the third housing 230 are folded substantially into the triangular shape, the processor 120 may display a first user interface on the first display area 240a. For example, the first user interface may include a virtual keyboard. For example, the first user interface may include a first application or an execution screen of the first application.

According to various embodiments, the processor 120 may control the overall operation of the multi-foldable electronic device 200 and signal flow between internal components, and may perform a data processing function. The processor 120 may include, for example, a central processing unit (CPU), an application processor, and/or a communication processor. The processor 120 may include a single-core processor or a multi-core processor. The processor 120 may be configured as at least one processor. For example, the processor 120 may include an application processor (e.g., the main processor 121 in FIG. 1) and a sensor hub processor (e.g., the auxiliary processor 123 in FIG. 1A). The sensor hub processor may be operatively connected to the first sensor 510, the second sensor 520, and the third sensor 530, and may transmit information detected and/or sensed through the first sensor 510, the second sensor 520, and the third sensor 530 to the application processor.

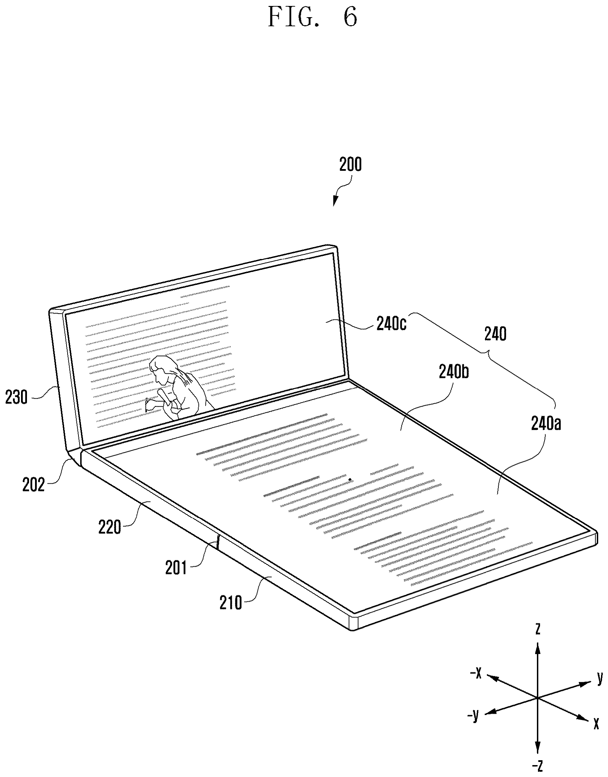

FIG. 6 is a diagram schematically illustrating a multi-foldable electronic device according to an embodiment of the disclosure, wherein a first housing and a second housing are unfolded, and a third housing is folded relative to the second housing at a first specified angle.

According to an embodiment, the multi-foldable electronic device 200 may have the first housing 210 and the second housing 220 that may be unfolded by about 180° with respect to the x-axis direction and the -x-axis direction. When the first housing 210 and the second housing 220 are unfolded by about 180° with respect to the x-axis direction and the -x-axis direction, the first housing 210 and the second housing 220 may be disposed at substantially the same angle with respect to the gravity direction (e.g., the -z-axis direction).

According to an embodiment, in the state where the first housing 210 and the second housing 220 are unfolded at approximately 180° with respect to the x-axis direction and the - x-axis direction, the third housing 230 may be folded at a first specified angle (e.g., approximately 100° to 140°) relative to the second housing 220 via the second hinge member 202. For example, when the third housing 230 is folded at the first specified angle relative to the second housing 220, the third housing 230 may be disposed between the -x-axis direction and the z-axis direction. For example, when the third housing 230 is folded at the first specified angle relative to the second housing 220, the angle between the second housing 220 and the third housing 230 may be approximately 100° to 140°.

According to an embodiment, in the state where the first housing 210 and the second housing 220 are unfolded at about 180° with respect to the x-axis direction and the -x-axis direction, when the third housing 230 is folded at a first specified angle relative to the second housing 220, the processor 120 may display a first user interface on the first display area 240a, a second user interface on the second display area 240b, and a third user interface on the third display area 240c. For example, the third user interface displayed on the third display area 240c may be different from the first user interface displayed on the first display area 240a and/or the second user interface displayed on the second display area 240b. For example, the third user interface displayed on the third display area 240c may be substantially identical to the first user interface displayed on the first display area 240a and/or the second user interface displayed on the second display area 240b. According to various embodiments, the user interface may include an application (e.g., an application execution screen).

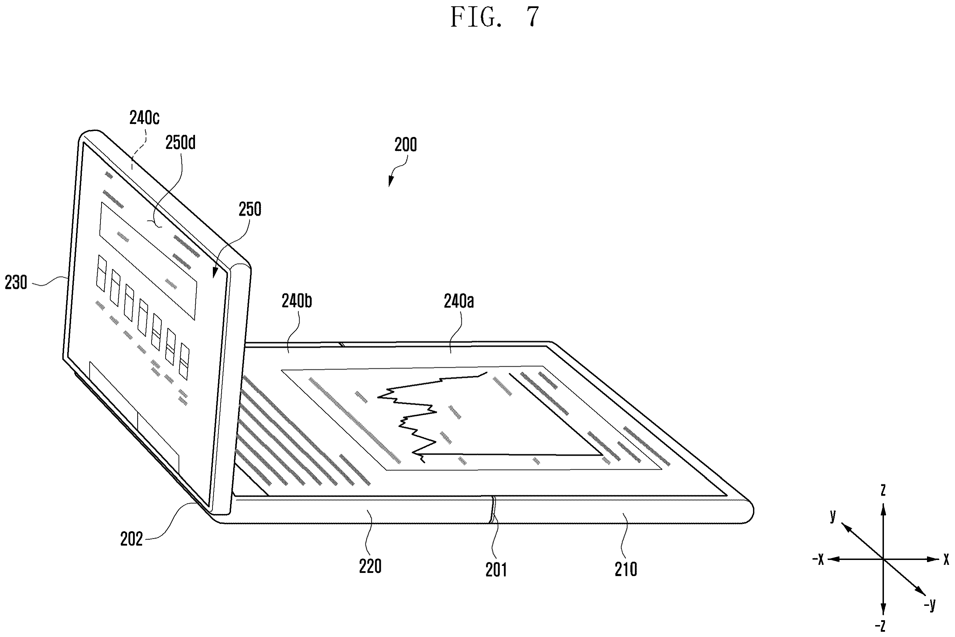

FIG. 7 is a diagram schematically illustrating a multi-foldable electronic device according to an embodiment of the disclosure, wherein a first housing and a second housing are unfolded, and a third housing is folded relative to the second housing at a second specified angle.

According to an embodiment, the multi-foldable electronic device 200 may have the first housing 210 and the second housing 220 that may be unfolded by approximately 180° with respect to the x-axis direction and the -x-axis direction. When the first housing 210 and the second housing 220 are unfolded at approximately 180° with respect to the x-axis direction and the -x-axis direction, the first housing 210 and the second housing 220 may be disposed at substantially the same angle with respect to the gravity direction (e.g., the -z-axis direction).

According to an embodiment, in the state where the first housing 210 and the second housing 220 are unfolded at approximately 180° with respect to the x-axis direction and the - x-axis direction, the third housing 230 may be folded at a second specified angle (e.g., approximately 80° to 100°) relative to the second housing 220 via the second hinge member 202. For example, when the third housing 230 is folded at the second specified angle relative to the second housing 220, the third housing 230 may be disposed at substantially the same direction as the z-axis direction. For example, when the third housing 230 is folded at a second specified angle relative to the second housing 220, the angle between the second housing 220 and the third housing 230 may be about 80° to 100°.

According to an embodiment, in the state where the first housing 210 and the second housing 220 are unfolded at about 180° with respect to the x-axis direction and the -x-axis direction, when the third housing 230 is folded at a second specified angle (e.g., about 80° to 100°) relative to the second housing 220, the processor 120 may display a first user interface on the first display area 240a, a second user interface on the second display area 240b, a third user interface on the third display area 240c, and the third user interface on the fourth display area 250d.

According to an embodiment, in the state where the first housing 210 and the second housing 220 are unfolded, when the third housing 230 is folded at a second specified angle (e.g., about 80° to 100°) relative to the second housing 220, the processor 120 may display substantially the same user interface (e.g., a third user interface) on the third display area 240c and the fourth display area 250d.

According to various embodiments, in the state where the first housing 210 and the second housing 220 are unfolded, when the third housing 230 is folded at a second specified angle (e.g., about 80° to 100°) relative to the second housing 220, the processor 120 may also display a third user interface on the third display area 240c and a fourth user interface on the third display area 250d. The third user interface and the fourth user interface may be different.

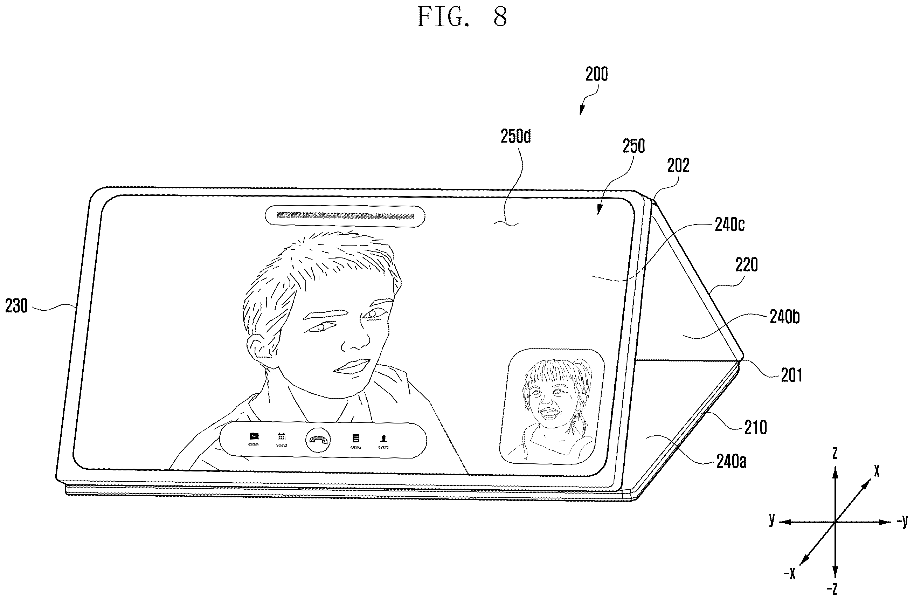

FIG. 8 is a diagram schematically illustrating a multi-foldable electronic device according to an embodiment of the disclosure, wherein a first housing, a second housing, and a third housing are folded into a substantially triangular shape.

According to an embodiment, the multi-foldable electronic device 200 may have the first housing 210 and the second housing 220 folded at a specified angle (e.g., approximately 60°) using the first hinge member 201, and the second housing 220 and the third housing 230 may be folded at a specified angle (e.g., approximately 60°) using the second hinge member 202. In this case, the first housing 210, the second housing 220, and the third housing 230 may be folded into a substantially triangular shape. When the first housing 210, the second housing 220, and the third housing 230 are folded into a substantially triangular shape, the processor 120 may display a fourth user interface on a fourth display area 250d of the sub-display 250. According to various embodiments, when the first housing 210, the second housing 220, and the third housing 230 are folded into a substantially triangular shape, the processor 120 may not display a user interface on the first display area 240a, the second display area 240b, and the third display area 240c.

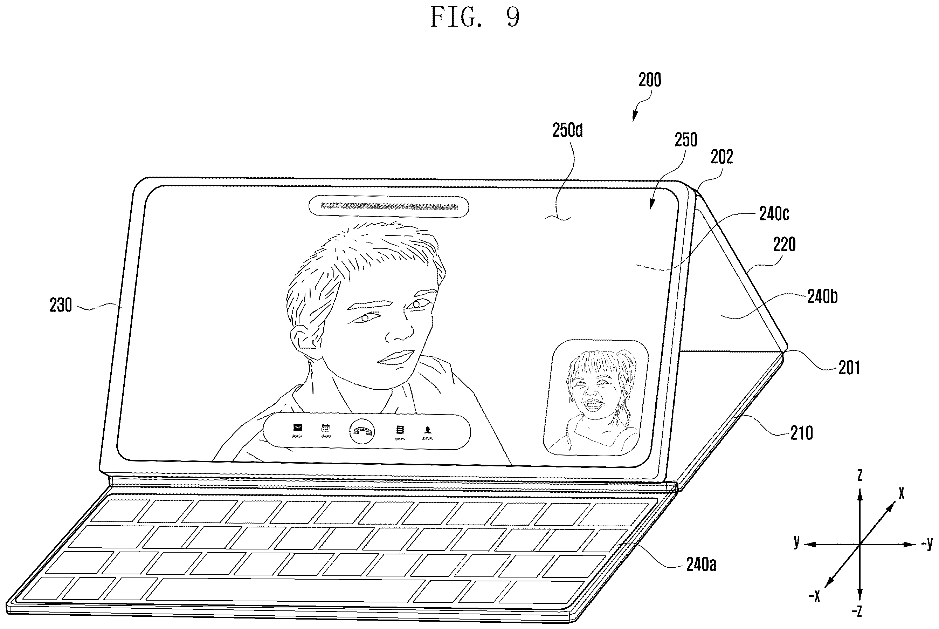

FIG. 9 is a diagram schematically illustrating the multi-foldable electronic device disclosed in FIG. 8, wherein, in the state where the first housing, the second housing, and the third housing are folded into a substantially triangular shape, the third housing is further folded at a specified angle relative to the second housing, according to various embodiments of the disclosure.

According to an embodiment, the multi-foldable electronic device 200 may be configured such that in the state where the first housing 210 and the second housing 220 are folded at a specified angle (e.g., approximately 60°) using the first hinge member 201, and the second housing 220 and the third housing 230 are folded at a specified angle (e.g., approximately 60°) using the second hinge member 202, as illustrated in FIG. 8, the third housing 230 may be further folded at a specified angle relative to the second housing 220, as illustrated in FIG. 9. In this case, the processor 120 may display a first user interface, such as a virtual keyboard, on at least a portion of the first display area 240a while displaying a fourth user interface on the fourth display area 250d of the sub-display 250. In this case, the user of the multi-foldable electronic device 200 may input text to the fourth user interface displayed on the fourth display area 250d through the virtual keyboard (e.g., the first user interface) displayed on the first display area 240a.

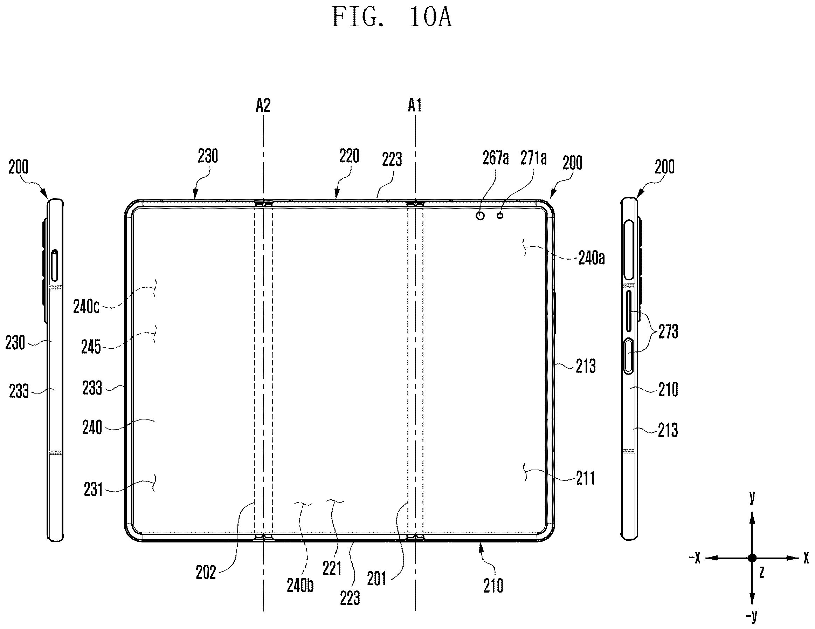

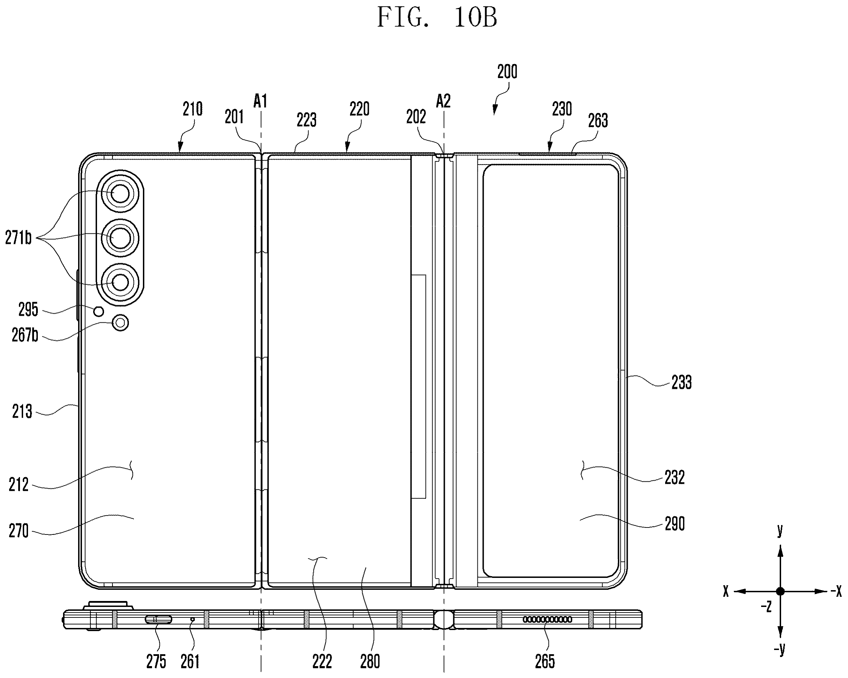

FIG. 10A is a schematic diagram illustrating a multi-foldable electronic device in an unfolded state, when viewed from the front, according to various embodiments of the disclosure. FIG. 10B is a schematic diagram illustrating a multi-foldable electronic device in an unfolded state, when viewed from the rear, according to various embodiments of the disclosure.

According to an embodiment, the embodiments disclosed in FIGS. 2A to 9 may refer to a G-type multi-foldable electronic device 200 in which the first housing 210, the second housing 220, and the third housing 230 are folded, for example, in a "G"-shape. According to various embodiments, some embodiments disclosed below may refer to a Z-type multi-foldable electronic device 200 in which the first housing 210, the second housing 220, and the third housing 230 are folded, for example, in a "Z"-shape.

According to various embodiments, the multi-foldable electronic device 200 disclosed below may include at least some of the embodiments described with reference to FIGS. 1 to 9.

In the description of the multi-foldable electronic device 200 according to various embodiments of the disclosure disclosed below, substantially identical components as those disclosed in the embodiments in FIGS. 2A to 9 will be given the same reference numerals, and redundant descriptions of their functions will be omitted.

According to various embodiments, the multi-foldable electronic device 200 disclosed in FIGS. 10A and 10B, compared to the embodiment disclosed in FIGS. 2A and 2B, may have a first camera module 271a disposed on the first surface 211 of the first housing 210, and a second camera module 271b disposed on the second surface 212 of the first housing 210.

According to various embodiments, the multi-foldable electronic device 200 disclosed in FIGS. 10A and 10B may not have a sub-display 250 (e.g., a second display) disposed on the sixth surface 232 of the third housing 230 (e.g., in the -z-axis direction), compared to the embodiment disclosed in FIGS. 2A and 2B.

According to various embodiments, the embodiments of the electronic device 101 disclosed in FIG. 1 may be included in the embodiments of the multi-foldable electronic device 200 disclosed in FIGS. 10A and 10B. For example, the multi-foldable electronic device 200 disclosed in FIGS. 10A and 10B may include the processor 120, the memory 130, the input module 150, the sound output module 155, the display module 160, the audio module 170, the sensor module 176, the interface 177, the connection terminal 178, the haptic module 179, the camera module 180, the antenna module 197, and/or subscriber identification module 196 disclosed in FIG. 1.

According to various embodiments, the multi-foldable electronic device 200 disclosed in FIGS. 10A and 10B may include at least some of the embodiments disclosed in FIG. 5. For example, the multi-foldable electronic device 200 disclosed in FIGS. 10A and 10B may include the first sensor 510, the second sensor 520, the third sensor 530, the flexible display 240, the memory 130, and/or the processor 120 disclosed in FIG. 5. For example, the first sensor 510, the second sensor 520, the third sensor 530, the flexible display 240, the memory 130, and/or the processor 120 disclosed in FIG. 5 may be included in the multi-foldable electronic device 200 disclosed in FIGS. 10A and 10B and may operate substantially in the same manner as the embodiments disclosed in FIG. 5.

Referring to FIGS. 10A and 10B, the multi-foldable electronic device 200 according to various embodiments of the disclosure may include a first housing 210, a second housing 220, a third housing 230, a first hinge member 201, a second hinge member 202, and/or a flexible display 240.

According to various embodiments, the first housing 210 may be foldably coupled to a first side of the second housing 220 (e.g., in the x-axis direction). The first hinge member 201 may be coupled between the first housing 210 and the second housing 220. The first hinge member 201 may be disposed such that the first housing 210 and the second housing 220 are foldable or unfoldable relative to each other. The first housing 210 and the second housing 220 may be coupled to be rotatable about a first folding axis A1 using the first hinge member 201 (e.g., an in-folding hinge).

According to various embodiments, the second housing 220 may be foldably coupled to one side of the first housing 210 (e.g., in the -x-axis direction). The second housing 220 may be operatively coupled to at least a portion of the first housing 210 at a first side (e.g., in the x-axis direction) and operatively coupled to at least a portion of the third housing 230 at a second side (e.g., in the -x-axis direction).

According to various embodiments, the third housing 230 may be foldably coupled to a second side of the second housing 220 (e.g., in the -x-axis direction). The second hinge member 202 may be coupled between the second housing 220 and the third housing 230. The second hinge member 202 may be disposed such that the second housing 220 and the third housing 230 are foldable or unfoldable relative to each other. The second housing 220 and the third housing 230 may be coupled to be rotatable about a second folding axis A2 using the second hinge member 202 (e.g., an out-folding hinge). According to various embodiments, one side of the third housing 230 (e.g., in the x-axis direction) may be foldably coupled to a second side of the second housing 220 (e.g., in the -x-axis direction).

According to various embodiments, in the multi-foldable electronic device 200, the first housing 210 may be folded relative to the second housing 220 via the first hinge member 201. For example, the first housing 210 may be folded relative to the second housing 220 via the first hinge member 201 in an in-folding manner. For example, the first housing 210 may be folded relative to the second housing 220 while rotating in the z-axis direction and the -x-axis direction via the first hinge member 201.

According to various embodiments, in the multi-foldable electronic device 200, the third housing 230 may be folded relative to the second housing 220 via the second hinge member 202. For example, the third housing 230 may be folded relative to the second housing 220 via the second hinge member 202 in an out-folding manner. For example, the third housing 230 may be folded relative to the second housing 220 while rotating in the -z-axis direction and the x-axis direction via the second hinge member 202.

According to various embodiments, the first housing 210 and the second housing 220 may be disposed on both sides of the first folding axis A1 where the first hinge member 201 is positioned. The angle and distance between the first housing 210 and the second housing 220 may vary depending on whether the foldable electronic device 200 is in an unfolded state, a folded state, or an intermediate state.

According to various embodiments, the second housing 220 and the third housing 230 may be disposed on both sides of the second folding axis A2 where the second hinge member 202 is positioned. The angle and distance between the second housing 220 and the third housing 230 may vary depending on whether the foldable electronic device 200 is in an unfolded state, a folded state, or an intermediate state.

According to various embodiments, the first hinge member 201 may include an in-folding hinge. For example, the second hinge member 202 may include an out-folding hinge.

According to various embodiments, the flexible display 240 may be disposed across at least a portion of the front surface (e.g., in the z-axis direction) of the first housing 210, the second housing 220, and the third housing 230. The flexible display 240 may include a first display area 240a disposed in the first housing 210, a second display area 240b disposed in the second housing 220, and a third display area 240c disposed in the third housing 230. The first display area 240a, the second display area 240b, and the third display area 240c may be formed integrally to form the flexible display 240. According to various embodiments, when the multi-foldable electronic device 200 is in an unfolded state, the flexible display 240 may be configured to be disposed over most of the front surface of the multi-foldable electronic device 200 (e.g., in the z-axis direction). At least a portion of the flexible display 240 may be transformed into a flat or curved surface. The division of the first display area 240a, the second display area 240b, and the third display area 240c of the flexible display 240 may be an exemplary physical division. The flexible display 240 may be formed as a seamless full screen.

In this document, the surface on which the flexible display 240 is disposed may be defined as the front surface of the multi-foldable electronic device 200 (e.g., in the z-axis direction), and the surface opposite the front surface may be defined as the back surface of the multi-foldable electronic device 200 (e.g., in the -z-axis direction). The surface surrounding the space between the front surface and the back surface may be defined as the lateral surface of the multi-foldable electronic device 200.

According to various embodiments, when the multi-foldable electronic device 200 is in an unfolded state, the first housing 210 may include a first surface 211 connected to at least a portion of the first hinge member 201 and disposed to face the front of the multi-foldable electronic device 200, a second surface 212 facing the opposite direction to the first surface 211, and/or a first lateral member 213 surrounding at least a portion of a first space between the first surface 211 and the second surface 212.

According to various embodiments, when the multi-foldable electronic device 200 is in the unfolded state, the second housing 220 may include a third surface 221 connected to at least a portion of the first hinge member 201 and second hinge member 202 and disposed to face the front of the multi-foldable electronic device 200, a fourth surface 222 facing the opposite direction to the third surface 221, and/or a second lateral member 223 surrounding at least a portion of a second space between the third surface 221 and the fourth surface 222.

According to various embodiments, when the multi-foldable electronic device 200 is in the unfolded state, the third housing 230 may include a fifth surface 231 connected to at least a portion of the second hinge member 202 and disposed to face the front of the multi-foldable electronic device 200, a sixth surface 232 facing the opposite direction to the fifth surface 231, and/or a third lateral member 233 surrounding at least a portion of a third space between the fifth surface 231 and the sixth surface 232.

According to various embodiments, when the multi-foldable electronic device 200 is in the unfolded state, the first surface 211, the third surface 221, and the fifth surface 231 may face substantially the same direction (e.g., the z-axis direction). When the multi-foldable electronic device 200 is in the unfolded, the second surface 212, the fourth surface 222, and the sixth surface 232 may face substantially the same direction (e.g., the -z-axis direction).

According to various embodiments, when the first housing 210 and the second housing 220 of the multi-foldable electronic device 200 are in a folded state (e.g., an in-folding folded state), the first surface 211 and the third surface 221 may be disposed to face each other. When the second housing 220 and the third housing 230 of the foldable electronic device 200 are in a folded state (e.g., an out-folding folded state), the fourth surface 222 and the sixth surface 232 may be disposed to face each other.

According to various embodiments, the multi-foldable electronic device 200 may include a recess 245 formed to accommodate the flexible display 240 through a structural combination of the first housing 210, the second housing 220, and the third housing 230. The recess 245 may have substantially the same size as the flexible display 240.

According to various embodiments, when the multi-foldable electronic device 200 is in an unfolded state, the first housing 210, the second housing 220, and the third housing 230 may form an angle of approximately 180 degrees, and the first display area 240a, the second display area 240b, and the third display area 240c of the flexible display 240 may be arranged to form substantially the same plane and face substantially the same direction (e.g., the z-axis direction).

According to various embodiments, the first housing 210 and the second housing 220 may form an angle that may stop at a specified folding angle between a folded state and an unfolded state using the first hinge member 201 (e.g., a free stop function). In various embodiments, the first housing 210 may be rotated to move toward the rear surface of the second housing 220 while being pressed in the unfolding direction (e.g., in the -z-axis direction), based on a specified inflection angle, using the first hinge member 201.

According to various embodiments, the second housing 220 and the third housing 230 may form an angle that may stop at a specified folding angle between a folded state and an unfolded state using the second hinge member 202. In various embodiments, the third housing 230 may be rotated toward the front surface of the second housing 220 while being pressed in a folding direction (e.g., in the z-axis direction), based on a specified inflection angle, using the second hinge member 202.

According to various embodiments, the flexible display 240 may be disposed to be supported by the first surface 211 of the first housing 210, the first hinge member 201, the third surface 221 of the second housing 220, the second hinge member 202, and the fifth surface 231 of the third housing 230.

According to various embodiments, the multi-foldable electronic device 200 may include a first rear cover 270 disposed on the second surface 212 of the first housing 210, a second rear cover 280 disposed on the fourth surface 222 of the second housing 220, and a third rear cover 290 disposed on the sixth surface 232 of the third housing 230. In various embodiments, at least a portion of the first rear cover 270 may be integrally formed with a portion of the first lateral member 213. In various embodiments, at least a portion of the second rear cover 280 may be integrally formed with a portion of the second lateral member 223. In various embodiments, at least a portion of the third rear cover 290 may be integrally formed with a portion of the third lateral member 233. According to an embodiment, at least one of the first rear cover 270, the second rear cover 280, and the third rear cover 290 may be configured as a substantially transparent plate (e.g., a glass plate including various coating layers, or a polymer plate) or an opaque plate.

According to various embodiments, the multi-foldable electronic device 200 may include at least one of an input module 261, audio output modules 263 and 265, sensor modules 267a and 267b, camera modules 271a and 271b, a key input device 273, an indicator (not shown), or a connector port 275. In various embodiments, the multi-foldable electronic device 200 may exclude at least one of the above-described components or may further include at least one other component.

According to an embodiment, the input module 261 may include at least one microphone disposed to detect the direction of sound. The input module 261 may include the input module 150 disclosed in FIG. 1.

According to an embodiment, the audio output modules 263 and 265 may include at least one speaker. For example, the audio output modules 263 and 265 may include a call receiver 263 disposed through the sixth surface 232 of the third housing 230 and/or a speaker 265 disposed in at least a part of the lower portion (e.g., in the -y-axis direction) of the third lateral member 233 of the third housing 230. For example, the speaker 265 may also be further disposed in the upper portion (e.g., in the y-axis direction) of the third lateral member 233 of the third housing 230. The audio output modules 263 and 265 may include the sound output module 155 disclosed in FIG. 1.

According to various embodiments, the input module 261, the audio output modules 263 and 265, and the connector port 275 may be disposed in the space of the first housing 210, the second housing 220, and/or the third housing 230, and may be exposed to the external environment through at least one hole formed in the first housing 210, the second housing 220, and/or the third housing 230. In an embodiment, the holes formed in the first housing 210, the second housing 220, and/or the third housing 230 may be used in common for the input module 261 and the audio output modules 263 and 265. In an embodiment, the audio output modules 263 and 265 may include a speaker (e.g., a piezo speaker) that operates without the holes formed in the first housing 210 and/or the third housing 230.

According to various embodiments, the camera modules 271a and 271b may include a first camera module 271a disposed on the first surface 211 of the first housing 210 and/or a second camera module 271b disposed on the second surface 212 of the first housing 210. According to an embodiment, the multi-foldable electronic device 200 may include a flash 295 disposed near the second camera module 271b. The flash 295 may include, for example, a light-emitting diode or a xenon lamp. According to an embodiment, the camera modules 271a and 271b may include one or more lenses, an image sensor, and/or an image signal processor. In an embodiment, at least one of the camera modules 271a and 271b may include two or more lenses (e.g., wide-angle and telephoto lenses) and image sensors, and may be disposed together on one surface of the first housing 210, the second housing 220, and/or the third housing 230. For example, the camera modules 271a and 271b may include the camera module 180 disclosed in FIG. 1.

According to an embodiment, the sensor modules 267a and 267b may generate electrical signals or data values corresponding to the internal operating state of the multi-foldable electronic device 200 or the external environmental state. According to various embodiments, the sensor modules 267a and 267b may include a first sensor module 267a disposed on the first surface 211 of the first housing 210 and/or a second sensor module 267b disposed on the second surface 212 of the first housing 210. For example, the sensor modules 267a and 267b may include the sensor module 176 disclosed in FIG. 1.

According to various embodiments, the key input device 273 may be disposed to be exposed to the outside through the first lateral member 213 of the first housing 210. In an embodiment, the key input device 273 may also be disposed to be exposed to the outside through the third lateral member 233 of the third housing 230. In an embodiment, the foldable electronic device 200 may exclude the entirety or some of the key input device 273, and the excluded key input device 273 may be implemented in other forms, such as soft keys, on the flexible display 240. In various embodiments, the key input device 273 may be implemented using a pressure sensor included in the flexible display 240. In an embodiment, the key input device 273 may include a power button and/or a volume control button of the foldable electronic device 200.

According to various embodiments, the connector port 275 may include a connector (e.g., a USB connector or an IF module (interface connector port module)) for transmitting and receiving power and/or data to and from an external electronic device (e.g., the external electronic devices 102, 104, and 108 in FIG. 1). In an embodiment, the connector port 275 may also perform a function for transmitting and receiving audio signals to and from an external electronic device, or may further include a separate connector port (e.g., an ear jack hole) for transmitting and receiving audio signals. For example, the connector port 275 may include the connecting terminal 178 disclosed in FIG. 1.

According to various embodiments, the camera module 271a, the sensor module 267a, and/or the indicator may be disposed to be exposed through the flexible display 240.

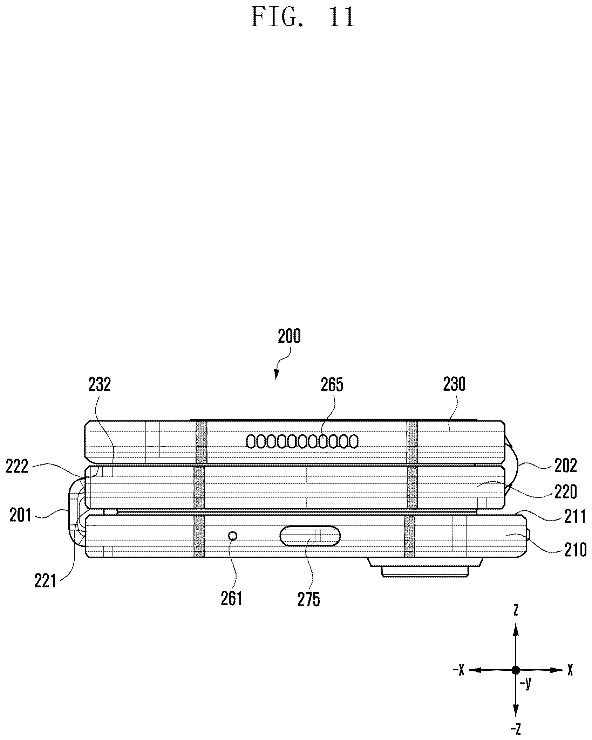

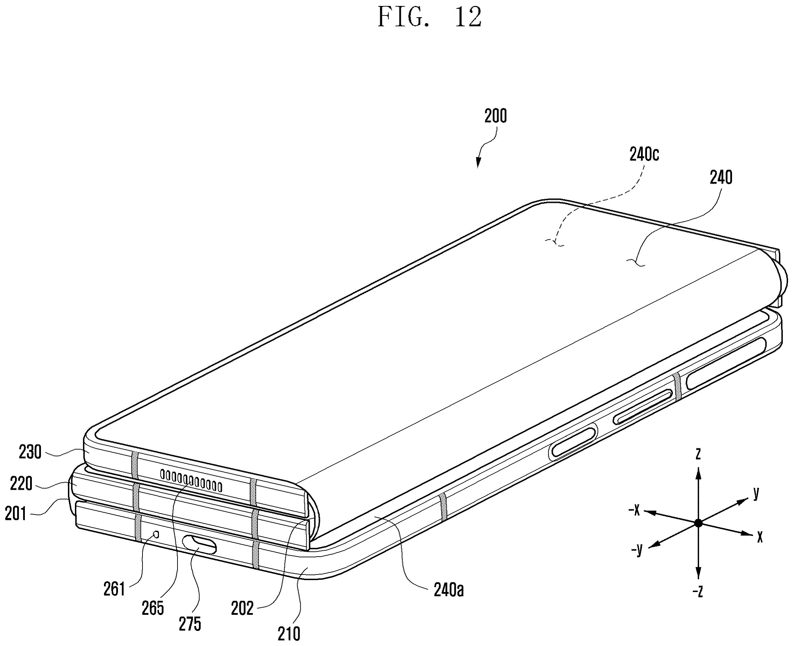

FIG. 11 is a schematic diagram illustrating a state where a first housing and a third housing of a multi-foldable electronic device are folded relative to a second housing, when viewed from one direction, according to various embodiments of the disclosure. FIG. 12 is a perspective view schematically illustrating a state where a first housing and a third housing of a multi-foldable electronic device are folded relative to a second housing according to various embodiments of the disclosure.

According to various embodiments, FIG. 11 may be a drawing showing a state, when viewed from the -y-axis direction, in which the first housing 210 and the third housing 230 of the multi-foldable electronic device 200 are folded toward the second housing 220. According to various embodiments, FIG. 12 may be a perspective view schematically illustrating a state in which at least a portion of the flexible display 240 is exposed to the outside, with the first housing 210 and the third housing 230 of the multi-foldable electronic device 200 folded toward the second housing 220.

Referring to FIGS. 11 and 12, the multi-foldable electronic device 200 may include a first housing 210, a second housing 220, a third housing 230, a first hinge member 201, and a second hinge member 202.

According to various embodiments, the first housing 210 may be folded in an in-folding manner relative to the second housing 220 via the first hinge member 201 (e.g., an in-folding hinge). When the first housing 210 and the second housing 220 are folded in an in-folding manner, the first surface 211 of the first housing 210 and the third surface 221 of the second housing 220 may be disposed to face each other.

According to various embodiments, the third housing 230 may be folded in an out-folding manner relative to the second housing 220 via the second hinge member 202 (e.g., an out-folding hinge). When the third housing 230 and the second housing 220 are folded in an out-folding manner, the fourth surface 222 of the second housing 220 and the sixth surface 232 of the third housing 230 may be disposed to face each other.

According to various embodiments, when the first housing 210 is folded relative to the second housing 220 via the first hinge member 201 (e.g., an in-folding hinge) and the third housing 230 is then folded toward the second housing 220 via the second hinge member 202 (e.g., an out-folding hinge), at least a portion (e.g., the third display area 240c) of the flexible display 240 may be exposed to the outside of the multi-foldable electronic device 200.

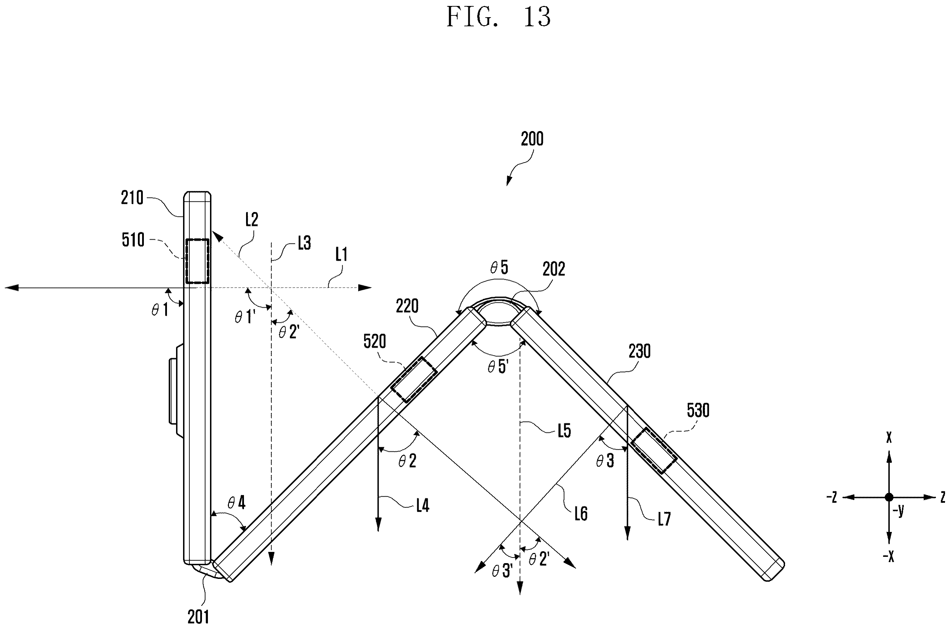

FIG. 13 is a diagram illustrating a method for calculating angles among a first housing, a second housing, and a third housing using a first sensor, a second sensor, and a third sensor of a multi-foldable electronic device according to various embodiments of the disclosure.

The method for calculating a first angle between the first housing 210 and the second housing and a second angle between the second housing 220 and the third housing of the multi-foldable electronic device 200 disclosed in FIG. 13 may be substantially identically applied to the multi-foldable electronic device 200 according to an embodiment of the disclosure shown in FIGS. 2A and 2B and the multi-foldable electronic device 200 according to various embodiments of the disclosure shown in FIGS. 10A and 10B.

Referring to FIG. 13, the multi-foldable electronic device 200 according to various embodiments of the disclosure may include a first housing 210, a first hinge member 201, a second housing 220, a second hinge member 202, and a third housing 230.

According to an embodiment, a first angle (e.g., θ4) between the first housing 210 and the second housing 220 may be detected using a first sensor 510 disposed in the first housing 210 and a second sensor 520 disposed in the second housing 220.

According to an embodiment, a second angle (e.g., θ5 or θ5') between the second housing 220 and the third housing 230 may be detected using the second sensor 520 disposed in the second housing 220 and a third sensor 530 disposed in the third housing 230.

According to an embodiment, when the first housing 210 is disposed vertically so as to be substantially the same the gravity direction (e.g., -x-axis direction), with a first virtual line L1 extending in the z-axis and -z-axis directions and a third virtual line L3 extending in the x-axis and -x-axis directions, the first housing 210 may form a 1-1st angle θ1 with the first virtual line L1 and a 1-2nd angle θ1' with the third virtual line L3. The 1-1st angle θ1 and the 1-2nd angle θ1' may be substantially the same.

According to an embodiment, the second housing 220 may be folded in an in-folding manner relative to the first housing 210 using the first hinge member 201. In this case, the second housing 220 may be disposed between the x-axis and z-axis directions, or between the -z-axis and -x-axis directions. For example, a second virtual line L2 may exist between the x-axis direction and the -z-axis direction, or between the -x-axis direction and the z-axis direction in FIG. 13. For example, a fourth virtual line L4 may exist at a point of the second housing 220 in the gravity direction (e.g., the -x-axis direction). For example, a fifth virtual line L5 may exist at a point of the third housing 230 in the gravity direction (e.g., the -x-axis direction). For example, a sixth virtual line L6 may exist between the -z-axis direction and the -x-axis direction, or between the x-axis direction and the z-axis direction, based on the third housing 230. For example, a seventh virtual line L7 may exist at a point of the third housing 230 in the gravity direction (e.g., the -x-axis direction). In this case, a 2-1st angle θ2 may be formed between the second virtual line L2 and the fourth virtual line L4, and a 2-2nd angle θ2' may be formed between the second virtual line L2 and the third virtual line L3 and between the second virtual line L2 and the fifth virtual line L5. The 2-1st angle θ2 and the 2-2nd angle θ2' may be substantially the same.

According to an embodiment, a 3-1st angle θ3 may be formed between the sixth virtual line L6 and the seventh virtual line L7, and a 3-2nd angle θ3' may be formed between the fifth virtual line L5 and the sixth virtual line L6. The 3-1st angle θ3 and the 3-2nd angle θ3' may be substantially the same.

According to an embodiment, when the first housing 210 and the second housing 220 are folded using the first hinge member 201, a first angle θ4 may be formed between the first housing 210 and the second housing 220. The first angle θ4 between the first housing 210 and the second housing 220 may be detected using the first sensor 510 disposed in the first housing 210 and the second sensor 520 disposed in the second housing 220.

For example, the first angle θ4 between the first housing 210 and the second housing 220 may be calculated using the following Equation 3.

$$[\text{Equation 3}]$$

$$360 = 90 + 90 + (\theta 1' + \theta 2') + \theta 4,$$

$$\Rightarrow \theta 4 = 360 - \{90 + 90 + (\theta 1' + \theta 2')\}$$

According to an embodiment, when the second housing 220 and the third housing 230 are folded using the second hinge member 202, a second angle θ5 or θ5' may be formed between the second housing 220 and the third housing 230. For example, the second angle θ5 or θ5' may include an angle θ5 formed on the outer side between the second housing 220 and the third housing 230 and an angle θ5' formed on the inner side between the second housing 220 and the third housing 230. For example, the second angle θ5 or θ5' formed between the second housing 220 and the third housing 230 may be detected using the second sensor 520 disposed in the second housing 220 and the third sensor 530 disposed in the third housing 230.

For example, the second angle θ5 or θ5' between the second housing 220 and the third housing 230 may be calculated using the following Equation 4.

[Equation 4]

$$360 = 90 + 90 + (\theta2' + \theta3') + \theta5'$$

$$\Rightarrow \theta5' = 360 - \{90 + 90 + (\theta2' + \theta3')\}$$

$$\Rightarrow \theta5 = 360 - \theta5'$$

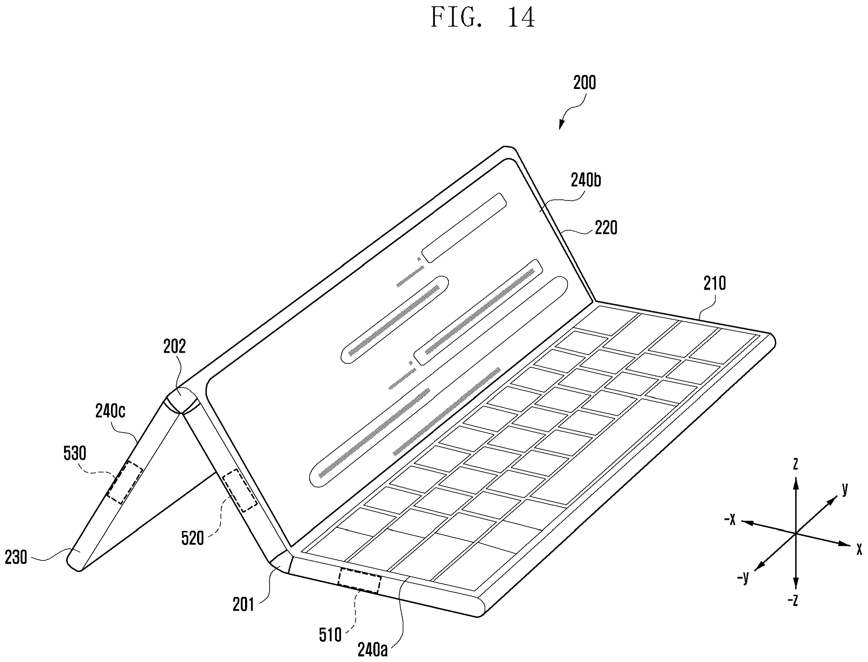

FIG. 14 is a diagram schematically illustrating an example of a usage state of a first housing, a second housing, and a third housing of a multi-foldable electronic device according to various embodiments of the disclosure.

According to various embodiments, a multi-foldable electronic device 200 may include a first housing 210, a second housing 220, a third housing 230, a first hinge member 201, and a second hinge member 202.

According to an embodiment, the first housing 210 may include a first sensor 510. The second housing 220 may include a second sensor 520. The third housing 230 may include a third sensor 530. For example, a first angle (e.g., the first angle θ4 in FIG. 13) between the first housing 210 and the second housing 220 may be detected using the first sensor 510 and the second sensor 520. For example, a second angle (e.g., the second angle θ5' or θ5' in FIG. 13) between the second housing 220 and the third housing 230 may be detected using the second sensor 520 and the third sensor 530.

According to an embodiment, the processor 120 may identify the usage state (e.g., an arrangement state or placed state) or usage mode of the first housing 210, the second housing 220, and the third housing 230, based on the first angle between the first housing 210 and the second housing 220 and the second angle between the second housing 220 and the third housing 230. The processor 120 may perform control to turn on and/or off at least one of the first display area 240a, the second display area 240b, and the third display area 240c of the flexible display 240, based on the usage state or usage mode of the first housing 210, the second housing 220, and the third housing 230. The processor 120 may display a user interface or application (e.g., an application execution screen) on at least one of the first display area 240a, the second display area 240b, and the third display area 240c of the flexible display 240, based on the usage state or usage mode of the first housing 210, the second housing 220, and the third housing 230.

According to an embodiment, the first hinge member 201 may include a hinge that allows the first housing 210 and the second housing 220 to be folded in an in-folding manner. The second hinge member 202 may include a hinge that allows the second housing 220 and the third housing 230 to be folded in an out-folding manner.

According to an embodiment, the first housing 210 may be placed on a floor surface, such as a table, so that the first display area 240a is exposed to the outside.

For example, the first housing 210 may be disposed in a vertical direction (e.g., the x-axis direction and the -x-axis direction) perpendicular to the gravity direction (e.g., the -z-axis direction).

According to an embodiment, the second housing 220 may be folded at a first specified angle (e.g., approximately 100° to 140°) relative to the first housing 210 using the first hinge member 201 (e.g., an in-folding hinge). For example, when the second housing 220 is folded at the first specified angle relative to the first housing 210, the second housing 220 may be disposed between the -x-axis direction and the z-axis direction.

According to an embodiment, the third housing 230 may be folded at a second specified angle (e.g., about 30° to 60°) relative to the second housing 220 using the second hinge member 202 (e.g., an out-folding hinge). For example, when the third housing 230 is folded at the second specified angle relative to the second housing 220, the third housing 230 may be disposed between the -x-axis direction and the -z-axis direction.

According to an embodiment, when the first housing 210 and the second housing 220 are folded at a first specified angle using the first hinge member 201, and the second housing 220 and the third housing 230 are folded at a second specified angle using the second hinge member 202, the processor 120 may display a first application (e.g., a virtual keyboard) on the first display area 240a, a second application (e.g., an image or text) on the second display area 240b, and a third application (e.g., an image or text) on the third display area 240c. For example, the first application, the second application, and the third application may be substantially the same or different. According to various embodiments, the application may include a user interface (UI) or an execution screen of the application.

According to various embodiments, when the first housing 210 and the second housing 220 are folded at a first specified angle using the first hinge member 201, and the second housing 220 and the third housing 230 are folded at a second specified angle using the second hinge member 202, the processor 120 may turn on and/or off at least one of the first display area 240a, the second display area 240b, and the third display area 240c, based on the first specified angle and the second specified angle.

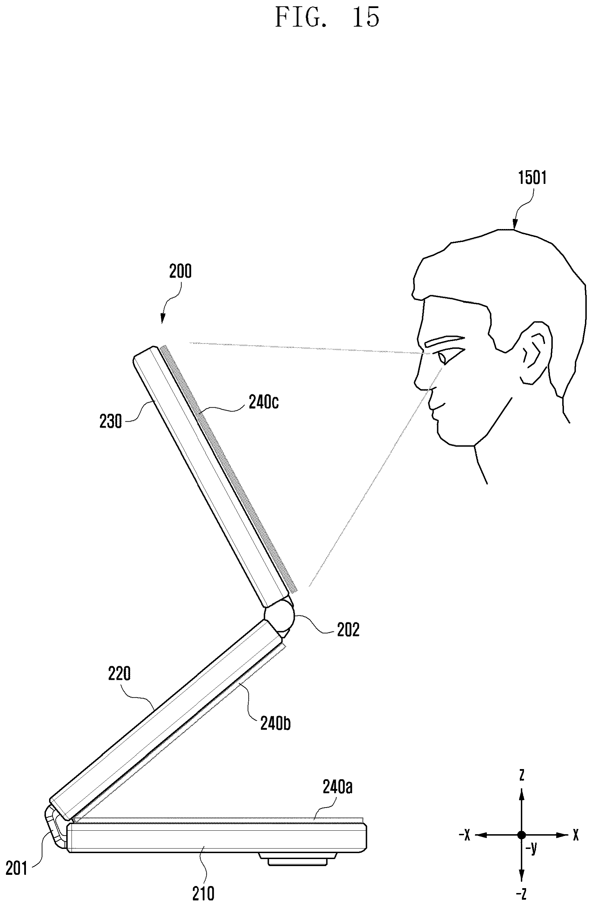

FIG. 15 is a diagram schematically illustrating a state in which a third display area is activated depending on a usage state of a multi-foldable electronic device according to various embodiments of the disclosure.

According to an embodiment, the first housing 210 may be placed on a floor surface, such as a table, so that the first display area 240a is exposed to the outside. For example, the first housing 210 may be disposed in a vertical direction (e.g., the x-axis direction and the -x-axis direction) perpendicular to the gravity direction (e.g., the -z-axis direction).

According to an embodiment, the second housing 220 may be folded at a first specified angle (e.g.,

approximately 30° to 60°) relative to the first housing 210 using the first hinge member 201 (e.g., an in-folding hinge). For example, when the second housing 220 is folded at a first specified angle relative to the first housing 210, the second housing 220 may be disposed between the z-axis direction and the x-axis direction.

According to an embodiment, the third housing 230 may be folded at a second specified angle (e.g., about 100° to 140°) relative to the second housing 220 using the second hinge member 202 (e.g., an out-folding hinge). For example, when the third housing 230 is folded at a second specified angle relative to the second housing 220, the third housing 230 may be disposed between the -x-axis direction and the z-axis direction.

According to an embodiment, when the first housing 210 and the second housing 220 are folded at a first specified angle using the first hinge member 201, and the second housing 220 and the third housing 230 are folded at a second specified angle using the second hinge member 202, the third display area 240c may be most exposed to the user 1501 of the multi-foldable electronic device 200. In this case, the processor 120 may turn on the third display area 240c that is most visible to the user 1501, and turn off the first display area 240a and the second display area 240b, based on the first specified angle and the second specified angle.

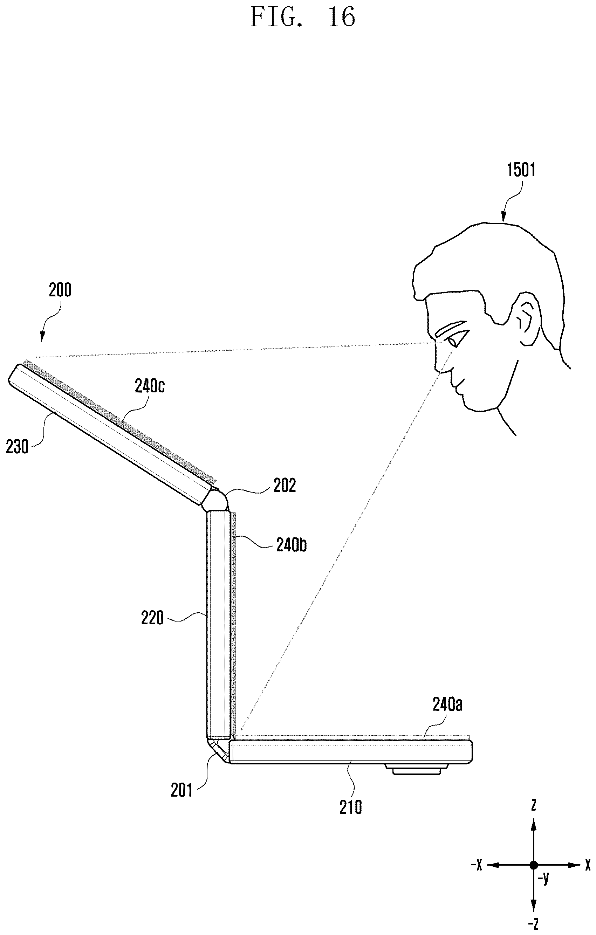

FIG. 16 is a diagram schematically illustrating a state in which a second display area and a third display area are activated depending on a usage state of a multi-foldable electronic device according to various embodiments of the disclosure.

According to an embodiment, the first housing 210 may be placed on a floor surface, such as a table, so that the first display area 240a is exposed to the outside. For example, the first housing 210 may be disposed in a vertical direction (e.g., the x-axis direction and the -x-axis direction) perpendicular to the gravity direction (e.g., the -z-axis direction).

According to an embodiment, the second housing 220 may be folded at a first specified angle (e.g., approximately 90°) relative to the first housing 210 using the first hinge member 201 (e.g., an in-folding hinge). For example, when the second housing 220 is folded at a first specified angle relative to the first housing 210, the second housing 220 may be disposed in a direction (e.g., the z-axis direction and the -z-axis direction) that is substantially the same as the gravity direction (e.g., the -z-axis direction).

According to an embodiment, the third housing 230 may be folded at a second specified angle (e.g., about 130° to 150°) relative to the second housing 220 using the second hinge member 202 (e.g., an out-folding hinge). For example, when the third housing 230 is folded at a second specified angle relative to the second housing 220, the third housing 230 may be disposed between the -x-axis direction and the z-axis direction.

According to an embodiment, when the first housing 210 and the second housing 220 are folded at a first specified angle using the first hinge member 201, and the second housing 220 and the third housing 230 are folded at a second specified angle using the second hinge member 202, the second display area 240b and the third display area 240c may be most exposed to the user 1501 of the multi-foldable electronic device 200. In this case, the processor 120 may turn on at least one of the second display area 240b and the third display area 240c that are most visible to the user 1501, and turn off the first display area 240a, based on the first specified angle and the second specified angle. According to various embodiments, in the state where the first housing 210 and the second housing 220 are folded at a first specified angle using the first hinge member 201, and the second housing 220 and the third housing 230 are folded at a second specified angle using the second hinge member 202, if the user 1501 is able to identify and use the first display area 240a, the processor 120 may also turn on the first display area 240a.

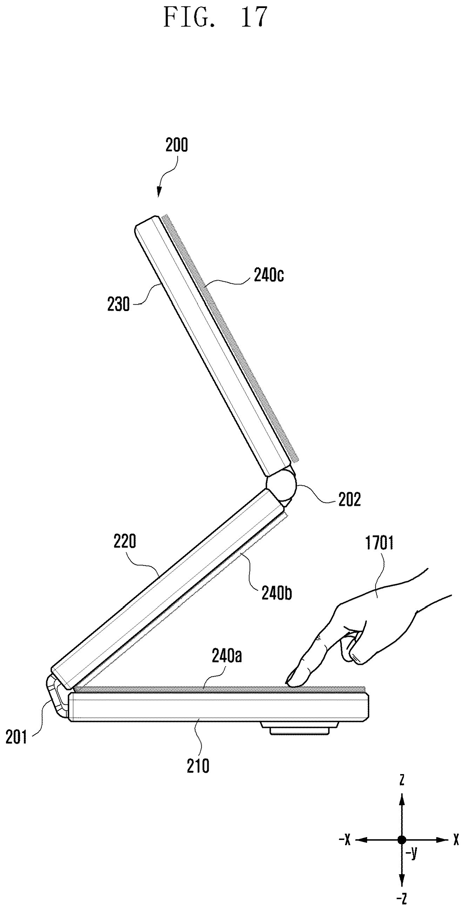

FIG. 17 is a diagram schematically illustrating a state in which a first display area and a third display area are activated depending on a usage state of a multi-foldable electronic device according to various embodiments of the disclosure.

According to an embodiment, the first housing 210 may be placed on a floor surface, such as a table, so that the first display area 240a is exposed to the outside. For example, the first housing 210 may be disposed in a vertical direction (e.g., the x-axis direction and the -x-axis direction) perpendicular to the gravity direction (e.g., the -z-axis direction).

According to an embodiment, the second housing 220 may be folded at a first specified angle (e.g., approximately 30° to 50°) relative to the first housing 210 using the first hinge member 201 (e.g., an in-folding hinge). For example, when the second housing 220 is folded at a first specified angle relative to the first housing 210, the second housing 220 may be disposed between the z-axis direction and the x-axis direction. In this case, the user of the multi-foldable electronic device 200 may not be able to identify and use the second display area 240b.

According to an embodiment, the third housing 230 may be folded at a second specified angle (e.g., about 150° to 170°) relative to the second housing 220 using the second hinge member 202 (e.g., an out-folding hinge). For example, when the third housing 230 is folded at a second specified angle relative to the second housing 220, the third housing 230 may be disposed closer to the z-axis direction, between the -x-axis direction and the z-axis direction.

According to an embodiment, when the first housing 210 and the second housing 220 are folded at a first specified angle using the first hinge member 201, and the second housing 220 and the third housing 230 are folded at a second specified angle using the second hinge member 202, the user of the multi-foldable electronic device 200 may not be able to identify and use the second display area 240b. In this case, the processor 120 may turn on at least one of the first display area 240a and the third display area 240c and turn off the second display area 240b, based on the first specified angle and the second specified angle. In this case, the user of the multi-foldable electronic device 200 may provide an input signal to the first display area 240a using a finger 1701 while viewing the user interface or the application execution screen (e.g., application) displayed on the third display area 240c.

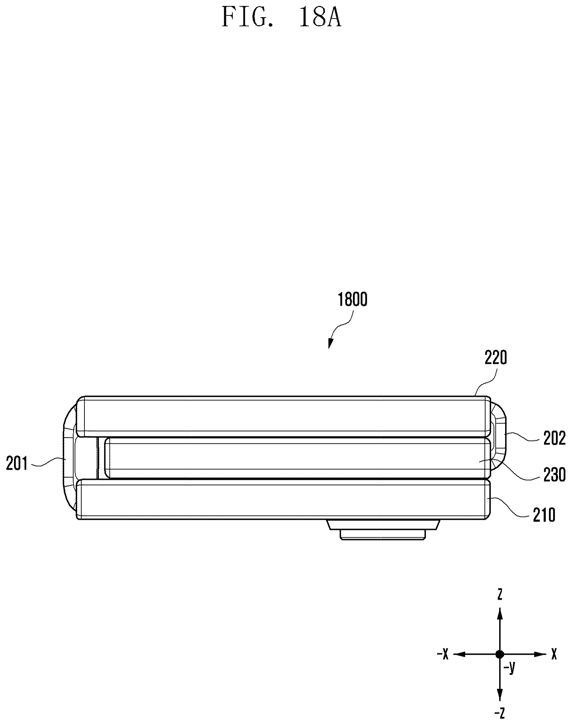

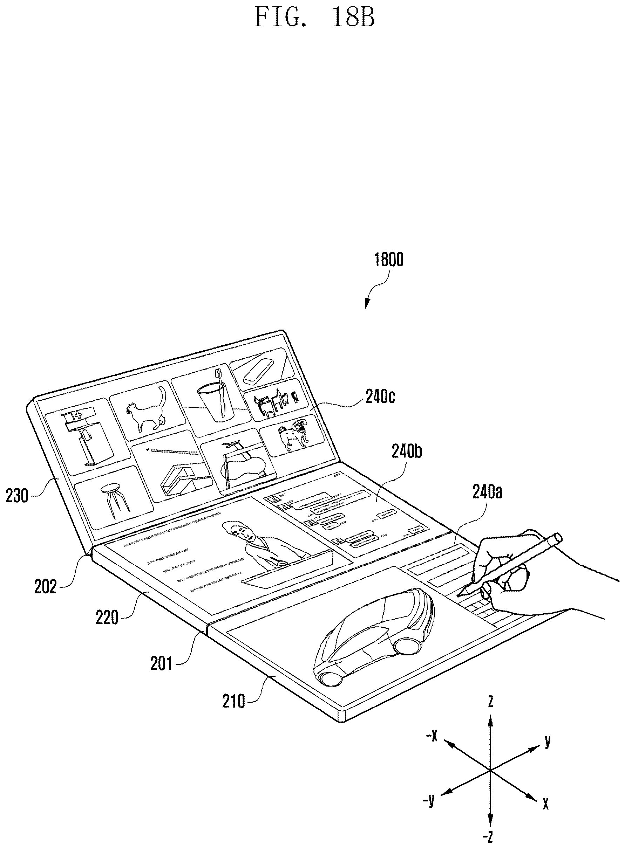

FIG. 18A is a diagram schematically illustrating a multi-foldable electronic device in a folded state of a first housing, a second housing, and a third housing according to various embodiments of the disclosure. FIG. 18B is a diagram schematically illustrating a multi-foldable electronic device in an unfolded state of a first housing, a second housing, and a third housing according to various embodiments of the disclosure.

Referring to FIGS. 18A and 18B, the multi-foldable electronic device 1800 according to various embodiments may include a first housing 210, a second housing 220, a third housing 230, a first hinge member 201, and a second hinge member 202.

According to an embodiment, the second housing 220 may first be folded relative to the first housing 210 via the first hinge member 201 (e.g., a first in-folding hinge).

According to an embodiment, the second housing 220 may first be folded relative to the first housing 210 via the first hinge member 201, and then the third housing 230 may be folded toward the second housing 220 via the second hinge member 202 (e.g., a second in-folding hinge). For example, the first housing 210, the second housing 220, and the third housing 230 of the multi-foldable electronic device 1800 disclosed in FIG. 18A may be folded into, for example, an "e"-shape.

According to an embodiment, the first hinge member 201 may have a second width. The second hinge member 202 may have a first width. For example, the second width may be wider than the first width. According to various embodiments, since the second housing 220 is folded relative to the first housing 210 and the third housing 230 is folded relative to the second housing 220 such that the third housing 230 must be disposed between the first housing 210 and the second housing 220, the second width of the first hinge member 201 may be configured to be wider than the first width of the second hinge member 202. For example, in the embodiment disclosed in FIG. 18A, the first hinge member 201 may include a wide hinge or a big hinge having a wider width than the second hinge member 202, and the second hinge member 202 may include a slim hinge or a small hinge having a narrower width than the first hinge member 201.

Referring to FIG. 18B, the multi-foldable electronic device 1800 according to various embodiments of the disclosure may have a first housing 210 and a second housing 220 that may be unfolded at approximately 180° with respect to the x-axis direction and the -x-axis direction. When the first housing 210 and the second housing 220 are unfolded at approximately 180° with respect to the x-axis direction and the -x-axis direction, the first housing 210 and the second housing 220 may be disposed at substantially the same angle with respect to the gravity direction (e.g., the -z-axis direction).

According to an embodiment, when the first housing 210 and the second housing 220 are unfolded at about 180° with respect to the x-axis direction and the -x-axis direction, the third housing 230 may be folded at a specified angle (e.g., about 100° to 140°) relative to the second housing 220 via the second hinge member 202. For example, when the third housing 230 is folded at a specified angle relative to the second housing 220, the third housing 230 may be disposed between the -x-axis direction and the z-axis direction.

According to an embodiment, in the state where the first housing 210 and the second housing 220 are unfolded at approximately 180° with respect to the x-axis direction and the - x-axis direction, when the third housing 230 is folded or unfolded at a specified angle relative to the second housing 220, the processor 120 may display a first application on the first display area 240a, a second application on the second display area 240b, and a third application on the third display area 240c. For example, the first application, the second application, and the third application may be substantially the same or different. According to various embodiments, the application may include a user interface or an application execution screen.

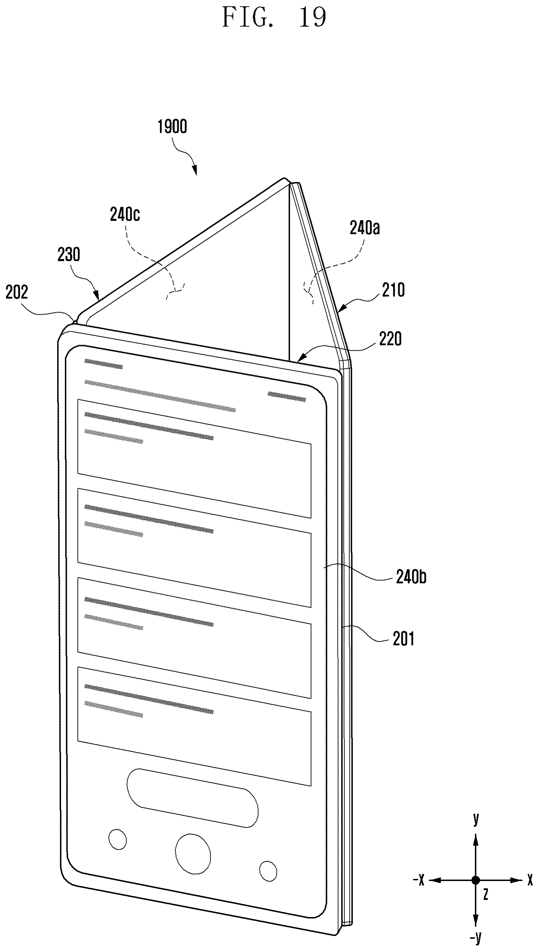

FIG. 19 is a diagram schematically illustrating a multi-foldable electronic device in a standing state where a first housing, a second housing, and a third housing are folded into a substantially triangular shape according to various embodiments of the disclosure.

Referring to FIG. 19, a multi-foldable electronic device 1900 according to various embodiments may include a first housing 210, a second housing 220, a third housing 230, a first hinge member 201, and a second hinge member 202.

According to an embodiment, the first housing 210 may be folded relative to the second housing 220 via the first hinge member 201 (e.g., a first out-folding hinge).

According to an embodiment, after the first housing 210 is folded relative to the second housing 220 via the first hinge member 201, the third housing 230 may be folded toward the second housing 220 via the second hinge member 202 (e.g., a second out-folding hinge).

According to an embodiment, the multi-foldable electronic device 1900 according to various embodiments may have the first housing 210 and the second housing 220 folded at a specified angle (e.g., about 60°) using the first hinge member 201, and the second housing 220 and the third housing 230 folded at a specified angle (e.g., about 60°) using the second hinge member 202. In this case, the first housing 210, the second housing 220, and the third housing 230 may be folded into a substantially triangular shape. When the first housing 210, the second housing 220, and the third housing 230 are folded into a substantially triangular shape and placed, for example, on the floor surface of a table, the processor 120 may display a first application on the first display area 240a, a second application on the second display area 240b, and a fourth application on the third display area 240c. For example, the first application, the second application, and the fourth application may be substantially the same or different. According to various embodiments, the application may include a user interface or an application execution screen.

A multi-foldable electronic device 200 according to an embodiment of the disclosure may include a first housing 210 including a first sensor 510, a second housing 220 including a second sensor 520, a third housing 230 including a third sensor 530, a first hinge member 201 coupled between the first housing 210 and the second housing 220, a second hinge member 202 coupled between the second housing 220 and the third housing 230, and a flexible display 240 including a first display area 240a supported by the first housing 210, a second display area 240b supported by the second housing 220, and a third display area 240c supported by the third housing 230, and the third housing 230 may include a fourth display area 250d on the opposite surface of the third display area. According to an embodiment, the multi-foldable electronic device 200 may include a processor 120 and a memory 130 configured to store instructions, and the instructions, when executed by the processor 120, may cause the multi-foldable electronic device 200 to detect a first angle between the first housing 210 and the second housing 220 using the first sensor 510 and the second sensor 520, detect a second angle between the second housing 220 and the third housing 230 using the second sensor 520 and the third sensor 530, identify usage mode of the first housing 210, the second housing 220, and the third housing 230, based on the first angle and the second angle, and change display states of the first display area 240a, the second display area 240b, the third display area 240c, and the fourth display area 250d, based on the usage mode.

According to an embodiment, the first hinge member 201 may include an in-folding hinge, and the second hinge member 202 may include an in-folding hinge.

According to an embodiment, when the usage mode is such that the first housing 210 and the second housing 220 are unfolded, and the third housing 230 is folded at a first specified angle relative to the second housing 220, the instructions, when executed by the processor 120, may cause the multi-foldable electronic device 200 to display a first application on the first display area 240a, display a second application on the second display area 240b, and display a third application on the third display area 240c.

According to an embodiment, the third application may be different from the first application and/or the second application.

According to an embodiment, when the usage mode is such that the first housing 210 and the second housing 220 are unfolded, and the third housing 230 is folded at a second specified angle relative to the second housing 220, the instructions, when executed by the processor 120, may cause the multi-foldable electronic device 200 to display a third application on the third display area 240c, and display the third application on the fourth display area 250d.

According to an embodiment, when the usage mode is such that the first housing 210 and the second housing 220 are folded at a specified angle, and the second housing 220 and the third housing 230 are folded at a specified angle so that the first housing 210, the second housing 220, and the third housing 230 are folded into a substantially triangular shape, the instructions, when executed by the processor 120, may cause the multi-foldable electronic device 200 to display a fourth application on the fourth display area 250d.

According to an embodiment, when the usage mode is such that the third housing 230 is further folded at a specified angle relative to the second housing 220 in a state where the first housing 210, the second housing 220, and the third housing 230 are folded substantially into the triangular shape, the instructions, when executed by the processor 120, may cause the multi-foldable electronic device 200 to display the first application on the first display area 240a.

According to an embodiment, the first application may include a virtual keyboard.

According to an embodiment, the third application may be the same as the first application and the second application.

According to an embodiment, when the usage mode is such that the first housing 210 and the second housing 220 are folded at a specified angle, and the second housing 220 and the third housing 230 are folded at a specified angle so that the first housing 210, the second housing 220, and the third housing 230 are folded into a substantially triangular shape, the instructions, when executed by the processor 120, may cause the multi-foldable electronic device 200 to not display an application on the first display area 240a, the second display area 240b, and the third display area 240c.

A multi-foldable electronic device 200 according to various embodiments of the disclosure may include a first housing 210 including a first sensor 510, a second housing 220 including a second sensor 520, a third housing 230 including a third sensor 530, a first hinge member 201 coupled between the first housing 210 and the second housing 220, a second hinge member 202 coupled between the second housing 220 and the third housing 230, and a flexible display 240 including a first display area 240a supported by the first housing 210, a second display area 240b supported by the second housing 220, and a third display area 240c supported by the third housing 230. According to an embodiment, the multi-foldable electronic device 200 may include a processor 120 and a memory 130 configured to store instructions, and the instructions, when executed by the processor 120, may cause the multi-foldable electronic device 200 to detect a first angle between the first housing 210 and the second housing 220 using the first sensor 510 and the second sensor 520, detect a second angle between the second housing 220 and the third housing 230 using the second sensor 520 and the third sensor 530, identify usage mode of the first housing 210, the second housing 220, and the third housing 230, based on the first angle and the second angle, and perform control to turn on and/or off at least one of the first display area 240a, the second display area 240b, and the third display area 240c, based on the usage mode.

According to an embodiment, the first hinge member 201 may include an in-folding hinge, and the second hinge member 202 may include an out-folding hinge.

According to an embodiment, the instructions, when executed by the processor 120, may cause the multi-foldable electronic device 200 to change display states of the first display area 240a, the second display area 240b, and the third display area 240c, based on the usage mode.

According to an embodiment, when the usage mode is such that the first housing 210 and the second housing 220 are folded at a first specified angle, and the second housing 220 and the third housing 230 are folded at a second specified angle, the instructions, when executed by the processor 120, may cause the multi-foldable electronic device 200 to display a first application on the first display area 240a, a second application on the second display area 240b, and a third application on the third display area 240c, based on the first specified angle and the second specified angle.

According to an embodiment, the first application, the second application, and the third application may be substantially the same or different.

According to an embodiment, when the usage mode is such that the first housing 210 and the second housing 220 are folded at a first specified angle, and the second housing 220 and the third housing 230 are folded at a second specified angle, the instructions, when executed by the processor 120, may cause the multi-foldable electronic device 200 to turn on the first display area 240a, turn on the second display area 240b, and turn on the third display area 240c, based on the first specified angle and the second specified angle.

According to an embodiment, when the usage mode is such that the first housing 210 and the second housing 220 are folded at a first specified angle, and the second housing 220 and the third housing 230 are folded at a second specified angle, the instructions, when executed by the processor 120, may cause the multi-foldable electronic device 200 to turn off the first display area 240a and the second display area 240b and turn on the third display area 240c, based on the first specified angle and the second specified angle.

According to an embodiment, when the usage mode is such that the first housing 210 and the second housing 220 are folded at a first specified angle, and the second housing 220 and the third housing 230 are folded at a second specified angle, the instructions, when executed by the processor 120, may cause the multi-foldable electronic device 200 to turn off the first display area 240a and turn on the second display area 240b and the third display area 240c, based on the first specified angle and the second specified angle.

According to an embodiment, when the usage mode is such that the first housing 210 and the second housing 220 are folded at a first specified angle, and the second housing 220 and the third housing 230 are folded at a second specified angle, the instructions, when executed by the processor 120, may cause the multi-foldable electronic device 200 to turn on the first display area 240a, turn off the second display area 240b, and turn on the third display area 240c, based on the first specified angle and the second specified angle.

According to an embodiment, when the first display area 240a is turned on, the second display area 240b is turned off, and the third display area 240c is turned on based on the first specified angle and the second specified angle, the instructions, when executed by the processor 120, may cause the multi-foldable electronic device 200 to display a virtual keyboard on the first display area 240a.

Although various embodiments of the disclosure have been described above, it will be apparent to those skilled in the art that various modifications and variations can be made within the scope of the disclosure, and such modifications and variations are to be included within the scope of the disclosure.

### Claims

1. A multi-foldable electronic device (200) comprising:

   a first housing (210) comprising a first sensor (510);
   a second housing (220) comprising a second sensor (520);
   a third housing (230) comprising a third sensor (530);
   a first hinge member (201) coupled between the first housing (210) and the second housing (220);
   a second hinge member (202) coupled between the second housing (220) and the third housing (230);
   a flexible display (240) comprising a first display area (240a) supported by the first housing (210), a second display area (240b) supported by the second housing (220), and a third display area

(240c) supported by the third housing (230), the third housing (230) comprising a fourth display area 250d on an opposite surface of the third display area (240c);

a processor (120); and
memory (130) storing instructions,
wherein the instructions, when executed by the processor (120), cause the multi-foldable electronic device (200) to:

> detect a first angle between the first housing (210) and the second housing (220) using the first sensor (510) and the second sensor (520);
> detect a second angle between the second housing (220) and the third housing (230) using the second sensor (520) and the third sensor (530);
> identify usage mode of the first housing (210), the second housing (220), and the third housing (230), based on the first angle and the second angle; and
> change display states of the first display area (240a), the second display area (240b), the third display area (240c), and the fourth display area (250d), based on the usage mode.

2. The multi-foldable electronic device of claim 1,

> wherein the first hinge member (201) comprises an in-folding hinge, and
> wherein the second hinge member (202) comprises an in-folding hinge.

3. The multi-foldable electronic device of claim 1 or 2,

> wherein, in case that the usage mode is such that the first housing (210) and the second housing (220) are unfolded, and the third housing (230) is folded at a first specified angle relative to the second housing (220),
> the instructions, when executed by the processor (120), cause the multi-foldable electronic device (200) to:

> > display a first application on the first display area (240a);
> > display a second application on the second display area (240b); and
> > display a third application on the third display area (240c).

4. The multi-foldable electronic device of claim 3, wherein the third application is different from the first application and/or the second application.

5. The multi-foldable electronic device of claim 3 or 4,

> wherein, in case that the usage mode is such that the first housing (210) and the second housing (220) are unfolded, and the third housing (230) is folded at a second specified angle relative to the second housing (220),
> the instructions, when executed by the processor (120), cause the multi-foldable electronic device (200) to:

> > display a third application on the third display area (240c); and
> > display the third application on the fourth display area (250d).

6. The multi-foldable electronic device of claim 3 or 4,

> wherein, in case that the usage mode is such that the first housing (210) and the second housing (220) are folded at a specified angle, and the second housing (220) and the third housing (230) are folded at a specified angle so that the first housing (210), the second housing (220), and the third housing (230) are folded into a substantially triangular shape,
> the instructions, when executed by the processor (120), cause the multi-foldable electronic device (200) to display a fourth application on the fourth display area (250d).

7. The multi-foldable electronic device of claim 6,

> wherein, in case that the usage mode is such that the third housing (230) is further folded at a specified angle relative to the second housing (220) in a state where the first housing (210), the second housing (220), and the third housing (230) are folded substantially into the triangular shape,
> the instructions, when executed by the processor (120), cause the multi-foldable electronic device (200) to display the first application on the first display area (240a).

8. The multi-foldable electronic device of claim 7, wherein the first application comprises a virtual keyboard.

9. The multi-foldable electronic device of claim 3, wherein the third application is identical to the first application and the second application.

10. The multi-foldable electronic device of claim 3 or 4,

> wherein, in case that the usage mode is such that the first housing (210) and the second housing (220) are folded at a specified angle, and the second housing (220) and the third housing (230) are folded at a specified angle so that the first housing (210), the second housing (220), and the third housing (230) are folded into a substantially triangular shape,
the instructions, when executed by the processor (120), cause the multi-foldable electronic device (200) to not display an application on the first display area (240a), the second display area (240b), and the third display area (240c).

11. A multi-foldable electronic device (200) comprising:

   a first housing (210) comprising a first sensor (510);
   a second housing (220) comprising a second sensor (520);
   a third housing (230) comprising a third sensor (530);
   a first hinge member (201) coupled between the first housing (210) and the second housing (220);
   a second hinge member (202) coupled between the second housing (220) and the third housing (230);
   a flexible display (240) comprising a first display area (240a) supported by the first housing (210), a second display area (240b) supported by the second housing (220), and a third display area (240c) supported by the third housing (230);
   a processor (120); and
   memory (130) storing instructions,
   wherein the instructions, when executed by the processor (120), cause the multi-foldable electronic device (200) to:

   detect a first angle between the first housing (210) and the second housing (220) using the first sensor (510) and the second sensor (520);
   detect a second angle between the second housing (220) and the third housing (230) using the second sensor (520) and the third sensor (530);
   identify usage mode of the first housing (210), the second housing (220), and the third housing (230), based on the first angle and the second angle; and
   perform control to turn on or turn off at least one of the first display area (240a), the second display area (240b), and the third display area (240c), based on the usage mode.

12. The multi-foldable electronic device of claim 11, wherein the instructions, when executed by the processor (120), cause the multi-foldable electronic device (200) to change display states of the first display area (240a), the second display area (240b), and the third display area (240c), based on the usage mode.

13. The multi-foldable electronic device of claim 11 or 12,

   wherein, in case that the usage mode is such that the first housing (210) and the second housing (220) are folded at a first specified angle, and the second housing (220) and the third housing (230) are folded at a second specified angle,
   the instructions, when executed by the processor (120), cause the multi-foldable electronic device (200) to display a first application on the first display area (240a), a second application on the second display area (240b), and a third application on the third display area (240c), based on the first specified angle and the second specified angle.

14. The multi-foldable electronic device of claim 11 or 12,

   wherein, in case that the usage mode is such that the first housing (210) and the second housing (220) are folded at a first specified angle, and the second housing (220) and the third housing (230) are folded at a second specified angle,
   the instructions, when executed by the processor (120), cause the multi-foldable electronic device (200) to turn on the first display area (240a), turn on the second display area (240b), and turn on the third display area (240c), based on the first specified angle and the second specified angle.

15. The multi-foldable electronic device of claim 11 or 12,

   wherein, in case that the usage mode is such that the first housing (210) and the second housing (220) are folded at a first specified angle, and the second housing (220) and the third housing (230) are folded at a second specified angle,
   the instructions, when executed by the processor (120), cause the multi-foldable electronic device (200) to turn off the first display area (240a) and the second display area (240b) and turn on the third display area (240c), based on the first specified angle and the second specified angle.

# FIG. 1

EP 4 738 051 A1

# FIG. 2A

# FIG. 2B

## FIG. 3A

# FIG. 3B

FIG. 3C

# FIG. 4

# FIG. 5

# FIG. 6

# FIG. 7

EP 4 738 051 A1

# FIG. 8

EP 4 738 051 A1

# FIG. 9

# FIG. 10A

EP 4 738 051 A1

# FIG. 10B

EP 4 738 051 A1

# FIG. 11

FIG. 12

FIG. 13

FIG. 14

EP 4 738 051 A1

# FIG. 15

# FIG. 16

# FIG. 17

# FIG. 18A

# FIG. 18B

# FIG. 19

## INTERNATIONAL SEARCH REPORT

| International application No. |
| --- |
| **PCT/KR2024/010765** |

| A. | CLASSIFICATION OF SUBJECT MATTER |
| --- | --- |
| | **G06F 1/16**(2006.01)i; **G06F 3/14**(2006.01)i |

According to International Patent Classification (IPC) or to both national classification and IPC

| B. | FIELDS SEARCHED |
| --- | --- |

Minimum documentation searched (classification system followed by classification symbols)

G06F 1/16(2006.01); A45C 11/00(2006.01); G09F 9/30(2006.01); H02J 50/10(2016.01); H02J 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 하우징 (housing), 힌지 (hinge), 각도 (angle), 모드 (mode), 영역 (region)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2021-0045668 A (SAMSUNG ELECTRONICS CO., LTD.) 27 April 2021 (2021-04-27) See paragraphs [0020]-[0089]. | 11-15 |
| A | | 1-10 |
| Y | KR 10-2022-0013766 A (SAMSUNG ELECTRONICS CO., LTD.) 04 February 2022 (2022-02-04) See paragraphs [0047]-[0050]. | 11-15 |
| A | KR 10-2022-0030863 A (SAMSUNG ELECTRONICS CO., LTD.) 11 March 2022 (2022-03-11) See paragraphs [0042]-[0112]. | 1-15 |
| A | US 2023-0030559 A1 (BEIJING XIAOMI MOBILE SOFTWARE CO., LTD.) 02 February 2023 (2023-02-02) See claims 1-19. | 1-15 |
| A | US 2023-0009746 A1 (LIU, Jintai) 12 January 2023 (2023-01-12) See claims 1-6. | 1-15 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 October 2024** | **24 October 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/010765**

| Patent document cited in search report | | | Publication date (day/month/year) | Patent family member(s) | | | Publication date (day/month/year) |
|---|---|---|---|---|---|---|---|
| KR | 10-2021-0045668 | A | 27 April 2021 | EP | 3999933 | A1 | 25 May 2022 |
| | | | | KR | 10-2695029 | B1 | 13 August 2024 |
| | | | | US | 11281254 | B2 | 22 March 2022 |
| | | | | US | 11714451 | B2 | 01 August 2023 |
| | | | | US | 2021-0116962 | A1 | 22 April 2021 |
| | | | | US | 2022-0206531 | A1 | 30 June 2022 |
| | | | | WO | 2021-075726 | A1 | 22 April 2021 |
| KR | 10-2022-0013766 | A | 04 February 2022 | EP | 4184281 | A1 | 24 May 2023 |
| | | | | EP | 4184281 | A4 | 24 January 2024 |
| | | | | US | 2022-0294886 | A1 | 15 September 2022 |
| | | | | WO | 2022-025589 | A1 | 03 February 2022 |
| KR | 10-2022-0030863 | A | 11 March 2022 | WO | 2022-050779 | A1 | 10 March 2022 |
| US | 2023-0030559 | A1 | 02 February 2023 | CN | 115695597 | A | 03 February 2023 |
| | | | | EP | 4124928 | A1 | 01 February 2023 |
| | | | | US | 11775012 | B2 | 03 October 2023 |
| US | 2023-0009746 | A1 | 12 January 2023 | None | | | |

Form PCT/ISA/210 (patent family annex) (July 2022)